# EUROPEAN PATENT SPECIFICATION

(11) **EP 4 467 786 B1**
(45) Date of publication and mention of the grant of the patent: **06.05.2026**
(21) Application number: 24177167.4
(22) Date of filing: 21.05.2024
(51) Int. Cl.: F01P 3/20, F01P 3/12, F01P 7/16, B60K 11/02, B60W 20/00, E02F 9/00, B60K 6/46, B60K 11/04, B60W 10/30, B60W 30/184, B60K 11/06, B60K 1/00

(54) **WORK VEHICLE WITH AN IMPROVED THERMAL LAYOUT AND A CONTROL METHOD THEREOF**
ARBEITSFAHRZEUG MIT VERBESSERTEM WÄRMELAYOUT UND STEUERUNGSVERFAHREN DAFÜR
VÉHICULE DE TRAVAIL AVEC UNE DISPOSITION THERMIQUE AMÉLIORÉE ET SON PROCÉDÉ DE COMMANDE

(30) Priority: 23.05.2023 IT 202300010380
(43) Date of publication of application: 27.11.2024
(73) Proprietor: CNH Industrial Italia S.p.A., 10156 Torino (IT)
(72) Inventor: Pellizzari, Piero, 10156 Turin (IT); Tondo, Matteo, 10156 Turin (IT); Martina, Vito, 10156 Turin (IT)
(74) Representative: CNH Industrial IP Department

(56) References cited:
- EP-A1- 3 176 334
- EP-A1- 3 686 352
- US-A1- 2004 045 749
- US-A1- 2005 274 507

## Description

### TECHNICAL FIELD

The present invention relates to a work vehicle comprising an improved thermal layout and to a related control method.

### BACKGROUND OF THE INNOVATION

Work vehicles are known comprising a main body, a plurality of wheels or tracks adapted to move the main body relative to a reference system, a hybrid propulsion system adapted to generate mechanical power and a transmission adapted to transmit motion from the hybrid propulsion system to the wheels or tracks. In detail, the hybrid propulsion system comprises one or more thermal engines and one or more electrical motors, which may be operated singularly or simultaneously according to various configurations, as shown for example in EP3176334A1.

In such known work vehicles, several components and systems generally need to be cooled down during operation. These components and systems include, by way of example, the thermal engine, the electrical motor, the transmission, hydraulic systems, batteries and other electrical or electronic devices (inverters, DC/DC converters, generators, hydraulic pump motor, etc.).

In order to control the temperature of these components, the work vehicles are usually equipped with a cooling assembly comprising a plurality of pumps, heat exchangers, and fans. The energy consumption associated with the cooling assembly is sometimes very high and is not always optimized. In particular, in some cases, the cooling assembly of the known vehicles is configured to carry out the cooling of certain components, even when some conditions occur that make cooling unnecessary. As a result, the amount of electrical energy available to be used on board the work vehicle, such as to power electrical or electronic devices of the work vehicle, is significantly reduced.

Therefore, there is a need within the industry for a work vehicle capable of optimizing the amount of electrical power required to cool down the components to be cooled of the work vehicle.

An aim of the present invention is to satisfy the above mentioned need in a cost-effective and optimized manner.

### SUMMARY OF THE INVENTION

The aforementioned aim is reached by a work vehicle and by a control method for a work vehicle as claimed in the appended independent claims.

Preferred embodiments of the invention are realized according to the claims dependent or related to the above independent claims.

### BRIEF DESCRIPTION OF THE DRAWING

For a better understanding of the present invention, one preferred embodiment is described in the following, by way of a non-limiting example, with reference to the attached drawings wherein:
- Figure 1 is a block diagram of a work vehicle according to a first embodiment of the present invention and with parts removed for clarity;
- Figure 2 is a block diagram of a portion of the work vehicle of Figure 1;
- Figure 3 is a block diagram of a portion of a work vehicle according to a second embodiment of the present invention;
- Figure 4 is a block diagram of a portion of a work vehicle according to a third embodiment of the present invention;
- Figure 5 is a block diagram of a portion of a work vehicle according to a fourth embodiment of the present invention; and
- Figure 6 is a block diagram of a portion of a work vehicle according to a fifth embodiment of the present invention.

### DETAILED DESCRIPTION OF THE INVENTION

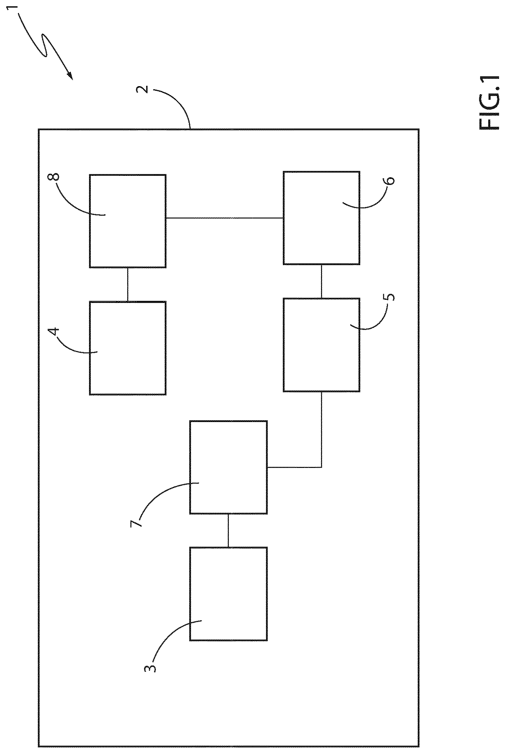

With reference to figure 1, numeral 1 schematically indicates a work vehicle, by way of example a telescopic handler.

Work vehicle 1 comprises a main body 2 and locomotion means 3, such as wheels or tracks, which are adapted to move main body 2 relative to a reference system. By way of example, the reference system is fixed to the ground.

Work vehicle 1 further comprises a thermal engine 4, such as an internal combustion engine, and an electrical motor 5, which are adapted to generate mechanical power for operating locomotion means 3. In detail, work vehicle 1 comprises a transmission 7, which is adapted to transmit motion from electrical motor 5 to locomotion means 3.

Work vehicle 1 also comprises electrical energy storage means 6 electrically connected to electrical motor 5 and adapted to supply electrical energy to electrical motor 5. In the embodiment shown, electrical energy storage means 6 comprise two batteries 60, 61.

Work vehicle 1 further comprises an electrical generator 8, which is operatively connected to thermal engine 4 and electrically connected to electrical energy storage means 6. Generator 8 is adapted to convert at least part of the motive power of thermal engine 4 into electric power, which may be stored into electrical energy storage means 6.

Furthermore, work vehicle 1 comprises an on-board charger 57, which is electrically connected to energy storage means 6 and which is adapted to be electrically connected to the electric grid.

In detail, work vehicle 1 is settable to:
- a plug-in charging mode, wherein work vehicle 1 is electrically connected to the electric grid and electrical energy storage means 6 are charged;
- an electric mode, wherein electrical motor 5 is adapted to supply mechanical energy to locomotion means 6 and thermal engine 4 is idle; and
- a hybrid mode, wherein electrical motor 5 is adapted to supply mechanical energy to locomotion means 6 and thermal engine 4 is adapted to supply mechanical energy to generator 8.

Furthermore, work vehicle 1 comprises one or more of an inverter 52 electrically connected to generator 8, a hydraulic system, an air system configured to cool down thermal engine 4, an inverter 53 electrically connected to electrical motor 5, a hydraulic pump motor 54, an inverter 55 electrically connected to hydraulic pump motor 54, a DC/DC converter 56.

Work vehicle 1 also comprises a first system 10 and a second system 20 to be cooled down, which comprise each a plurality of components of work vehicle 1.

In general, each component to be cooled of work vehicle 1 is preferably associated with a nominal cooling flow rate range, which is a range of the flow rate of a cooling fluid adapted to remove heat from the component without causing damages to the component. On the one hand, if a component is cooled down by a cooling flow rate that is greater than the maximum value of the nominal cooling flow rate range, the component may be overcooled; on the other hand, if a component is cooled down by a cooling flow rate that is lower than the minimum value of the nominal cooling flow rate range, the component may overheat.

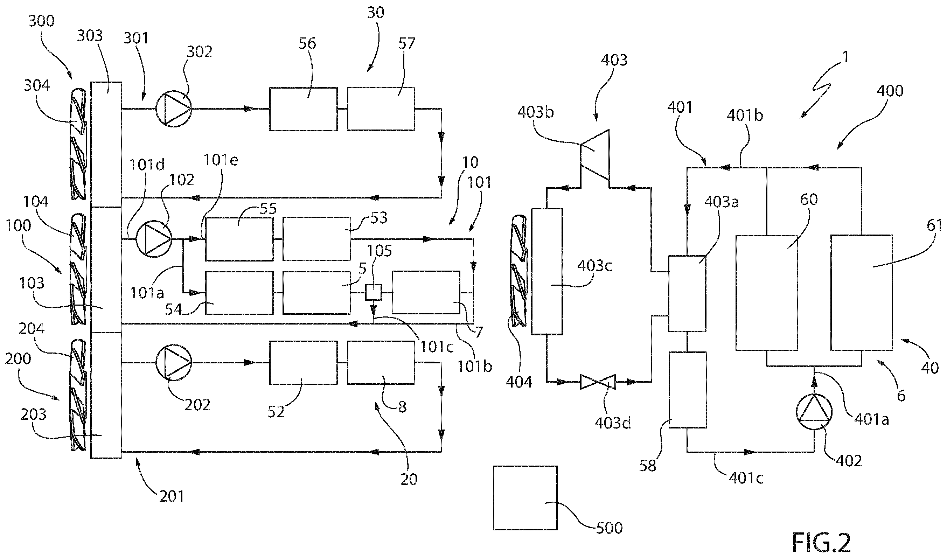

Advantageously, work vehicle 1 comprises a first cooling assembly 100 and a second cooling assembly 200, which are respectively configured to cool down first system 10 and second system 20. First cooling assembly 100 comprises a circuit 101 adapted to be crossed by a fluid, a pump 102 configured to circulate the fluid within circuit 101 and a heat exchanger 103. Second cooling assembly 200 comprises a circuit 201 adapted to be crossed by a fluid, a pump 202 configured to circulate the fluid within circuit 201 and a heat exchanger 203 (Figure 2).

Pumps 102 and 202 are controllable independently of each other. In detail, the rotational speed of pump 102 and/or the flow rate of the fluid crossing pump 102 may be varied independently of the rotational speed of pump 202 and/or the flow rate of the fluid crossing pump 202.

Circuits 101 and 201 are adapted to cross at least in part or are arranged in close proximity to the components to be cooled of the respective first system 10 and second system 20. Accordingly, the fluid flowing through the respective circuit 101, 201 is adapted to remove heat from the components traversed by or placed in close proximity to the circuit 101, 201.

The fluid flowing within circuit 101 may be equal to or different from the fluid flowing within circuit 201.

Furthermore, in the embodiment shown, heat exchangers 103 and 203 are radiators.

Work vehicle 1 further comprises a control unit 500, which is configured to control first cooling assembly 100 and second cooling assembly 200. In detail, control unit 500 is operatively connected to pumps 102 and 202.

First cooling assembly 100 also comprises a fan 104, which is adapted to increase the kinetic energy of the air impinging first heat exchanger 103 and second cooling assembly 200 comprises a fan 204, which is adapted to increase the kinetic energy of the air impinging heat exchanger 203 (Figure 2).

Fan 104 and fan 204 are operatively connected to control unit 500 and controllable independently of each other. In detail, the rotational speed of fan 104 and fan 204 are variable.

First system 10 and second system 20 comprise each at least two components of work vehicle 1 having respective nominal flow rate ranges at least partially overlapping. In other words, the at least two components can be cooled down by a flow rate of the fluid flowing within the respective circuit 101, 201 that falls within the nominal flow rate ranges of all components in the same system 10, 20. Preferably, the at least two components have respective nominal flow rate ranges that are identical to one another.

As shown in Figure 2, first system 10 comprises hydraulic pump motor 54, electrical motor 5, transmission 7, inverter 53 and inverter 55 and second system 20 comprises inverter 52 and generator 8. In other words, first cooling assembly 100 is adapted to cool down hydraulic pump motor 54, electrical motor 5, transmission 7, inverter 53 and inverter 55 and second cooling assembly 200 is adapted to cool down inverter 52 and generator 8.

In detail, circuit 101 comprises:
- a branch 101d extending between heat exchanger 103 and pump 102;
- a branch 101a extending from pump 102 and adapted to guide the fluid in succession across or in proximity to hydraulic pump motor 54, electrical motor 5 and transmission 7;
- a branch 101e extending from pump 102 and adapted to guide the fluid in succession across or in proximity to inverter 55 and inverter 53;
- a branch 101b, which fluidly connects branches 101a and 101e to heat exchanger 103.

In other words, first cooling assembly 100 is adapted to cool down inverter 55 and inverter 53 in parallel to hydraulic pump motor 54, electrical motor 5 and transmission 7. In addition, second cooling assembly 200 is adapted to cool down inverter 52 and generator 8 in series.

Circuit 101 further comprises a branch 101c extending between branch 101a and branch 101b. In detail, branch 101c fluidly connects branch 101a to branch 101b at a portion of branch 101a interposed between the stretch of branch 101a passing through or in proximity to electrical motor 5 and the stretch of branch 101a passing through or in proximity to transmission 7.

First cooling assembly 100 also comprises a by-pass valve 105, which is fluidly connected to both branch 101a and branch 101c. In detail, by-pass valve 105 is fluidly interposed between the stretch of branch 101a passing through or in proximity to electrical motor 5 and the stretch of branch 101a passing through or in proximity to transmission 7.

By-pass valve 105 is settable to:
- a first configuration, wherein it is adapted to allow the passage of the fluid from pump 102 towards transmission 7 along branch 101a and adapted to deny the passage of the fluid along branch 101c; or
- a second configuration, wherein it is adapted to deny the passage of the fluid from pump 102 towards transmission 7 along branch 101a and adapted to allow the passage of the fluid along branch 101c.

Control unit 500 is operatively connected to by-pass valve 105 and is configured to set by-pass valve 105 to the first configuration when a temperature of transmission 7 is greater than a temperature threshold and to set by-pass valve 105 to the second configuration when the temperature of transmission 7 is lower than the temperature threshold. In detail, the temperature of transmission 7 shall mean a mean temperature of transmission 7 or a temperature in proximity to transmission 7 or a temperature of a specific region or a specific component of transmission 7.

Furthermore, work vehicle 1 comprises a third system 30 and a fourth system 40 to be cooled down, which comprise each a plurality of components of work vehicle 1.

Work vehicle 1 also comprises a third cooling assembly 300 and a fourth cooling assembly 400, which are respectively configured to cool down third system 30 and fourth system 40. Third cooling assembly 300 comprises a circuit 301 adapted to be crossed by a fluid, a pump 302 configured to circulate the fluid within circuit 301 and a heat exchanger 303. Fourth cooling assembly 400 comprises a circuit 401 adapted to be crossed by a fluid, a pump 402 configured to circulate the fluid within circuit 401 and a heat exchanger 403.

Pumps 302 and 402 are operatively connected to control unit 500 and controllable independently of each other and independently of pumps 102 and 202. In addition, the rotational speed of pumps 302, 402 and/or the flow rate of the fluid crossing pumps 302, 402 are variable.

Circuits 301 and 401 are adapted to cross at least in part or are arranged in close proximity to the components to be cooled of the respective third system 30 and fourth system 40. Accordingly, the fluid flowing through the respective circuit 301, 401 is adapted to remove heat from the components traversed by or placed in close proximity to the circuit 301, 401.

The fluid flowing within circuit 301 may be equal to or different from the fluid flowing within circuits 101, 201, 401.

Furthermore, in the embodiment shown, heat exchanger 303 is a radiator.

Third cooling assembly 300 also comprises a fan 304, which is adapted to increase the kinetic energy of the air impinging heat exchanger 303. Fan 304 is controllable independently of fans 104, 204 (Figure 2). In detail, fan 304 is operatively connected to control unit 500.

As shown in Figure 2, third system 30 comprises DC/DC converter 56 and on-board charger 57. In detail, third cooling assembly 300 is adapted to cool down DC/DC converter 56 and on-board charger 57 in series.

In addition, fourth system 40 comprises electrical energy storage means 6. In other words, fourth cooling assembly 400 is adapted to cool down electrical energy storage means 6.

In detail, heat exchanger 403 is a chiller, which comprises, in turn, an evaporator 403a, a compressor 403b, a condenser 403c and a thermal expansion valve 403d. In further detail, evaporator 403a is adapted to be crossed by the fluid flowing within circuit 401.

As shown in Figure 2, circuit 401 comprises:
- a branch 401a extending from pump 402 towards batteries 60, 61;
- a branch 401b extending between branch 401a and heat exchanger 403;
- a branch 401c extending between heat exchanger 403 and pump 402.

In detail, fourth cooling assembly 400 is adapted to undercool electrical energy storage means 6. In further detail, fourth cooling assembly 400 is adapted to cool down batteries 60, 61 in parallel.

Fourth system 40 further comprises a fan 404, which is adapted to increase the kinetic energy of the air impinging condenser 403c. Fan 404 is controllable independently of fan 104, 204 and/or 404. In detail, fan 404 is operatively connected to control unit 500.

Furthermore, circuit 401 also comprises a heater 58, which is arranged at branch 401c and adapted to increase the temperature of the fluid flowing though circuit 401. Heater 58 is operatively connected to control unit 500.

Preferably but not necessarily, heat exchangers 103, 203 and 303 are arranged adjacent to one another, in contact with one another or in close proximity to one another. In the embodiment shown, heat exchanger 103 is interposed between heat exchanger 203 and heat exchanger 303.

Furthermore, control unit 500 is configured to activate pump 202 and/or fan 204 when work vehicle 1 is set to the hybrid mode and to deactivate pump 202 and fan 204 when work vehicle 1 is set to the plug-in charging mode or the electric mode.

Control unit 500 is also configured to activate pump 302 and fan 304 and to deactivate pumps 102 and 202, when work vehicle 1 is set to the plug-in charging mode. In addition, preferably, control unit 500 is also configured to deactivate fans 104 and 204, when work vehicle 1 is set to the plug-in charging mode.

When work vehicle 1 is set to the hybrid mode, control unit 500 is configured to activate cooling assemblies 100, 200 and 300; when work vehicle 1 is set to the plug-in charging mode, control unit 500 is configured to activate cooling assembly 300 and to deactivate cooling assemblies 100 and 200; when work vehicle 1 is set to the electric mode, control unit 500 is configured to activate cooling assemblies 100 and 300 and to deactivate cooling assembly 200. The expression "activating a cooling assembly" means activating the pump(s) and/or the fan(s) of the relative cooling assembly. The expression "activating a pump" means commanding the pump to transfer energy to the fluid; the expression "activating a fan" means driving the fan in rotation.

Preferably, control unit 500 is configured to activate cooling assembly 300 as soon as work vehicle 1 is started, i.e., as soon as electrical motor 5 and/or thermal engine 4 are turned on or any electric or electronic device of work vehicle 1 is switched on. More preferably, control unit 500 is configured to activate cooling assembly 300 as soon as work vehicle 1 is started, even if work vehicle 1 is stationary with respect to the reference system. This allows DC/DC converter 56 to be cooled under all operating modes of work vehicle 1.

Control unit 500 is further configured to:
- activate pump 402 and chiller 403 (in particular, compressor 403b and fan 404), when a temperature of electrical energy storage means 6 is greater than a first temperature threshold; and
- deactivate pump 402 and chiller 403 and/or activating heater 58 when the temperature of electrical energy storage means 6 is lower than a second temperature threshold, which is lower than the first temperature threshold.

By way of example, the temperature of electrical energy storage means is a temperature of battery 60 and/or battery 61.

The operation of work vehicle 1 according to the present invention is described in the following.

In use, when work vehicle 1 is set to the hybrid mode, locomotion means 6 receive mechanical power from electrical motor 5, thermal engine 4 recharges electrical energy storage means 6 by means of generator 8 and control unit 500 activates cooling assemblies 100, 200 and 300.

In detail, control unit 500 activates pump 102 and fan 104 and the fluid contained within circuit 101 flows from pump 102 along branches 101a and 101e. In further detail, when the fluid flows along branch 101e, it cools down inverter 55 and inverter 53; when the fluid flows along branch 101a, it cools down hydraulic pump motor 54 and electric motor 5. In addition, if the temperature of transmission 7 is greater than the temperature threshold, control unit 500 sets by-pass valve 105 to the first configuration and the fluid also cools down transmission 7; if the temperature of transmission 7 is lower than the temperature threshold, control unit 500 sets by-pass valve 105 to the second configuration and the fluid flows through branch 101c, thus impeding the cooling of transmission 7.

At the same time, control unit 500 activates pump 202 and fan 204 and the fluid contained within circuit 201 cools down inverter 52 and generator 8. In addition, control unit 500 activates pump 302 and fan 304 and the fluid contained within circuit 301 cools down DC/DC converter 56 and on-board charger 57.

When work vehicle 1 is set to the plug-in charging mode, work vehicle 1 is stationary relative to the reference system, on-board charger 57 recharges electrical energy storage means 6, and control unit 500 activates cooling assembly 300 and deactivates cooling assemblies 100 and 200.

When work vehicle 1 is set to the electric mode, electrical motor 5 operates locomotion means 6, thermal engine 4 is idle and control unit 500 activates cooling assemblies 100 and 300 and deactivates cooling assembly 200.

At the same time, control unit 500 activates pump 402 and chiller 403, when the temperature of electrical energy storage means 6 is greater than the first temperature threshold and deactivates pump 402 and chiller 403 and/or activates heater 58 when the temperature of electrical energy storage means 6 is lower than the second temperature threshold.

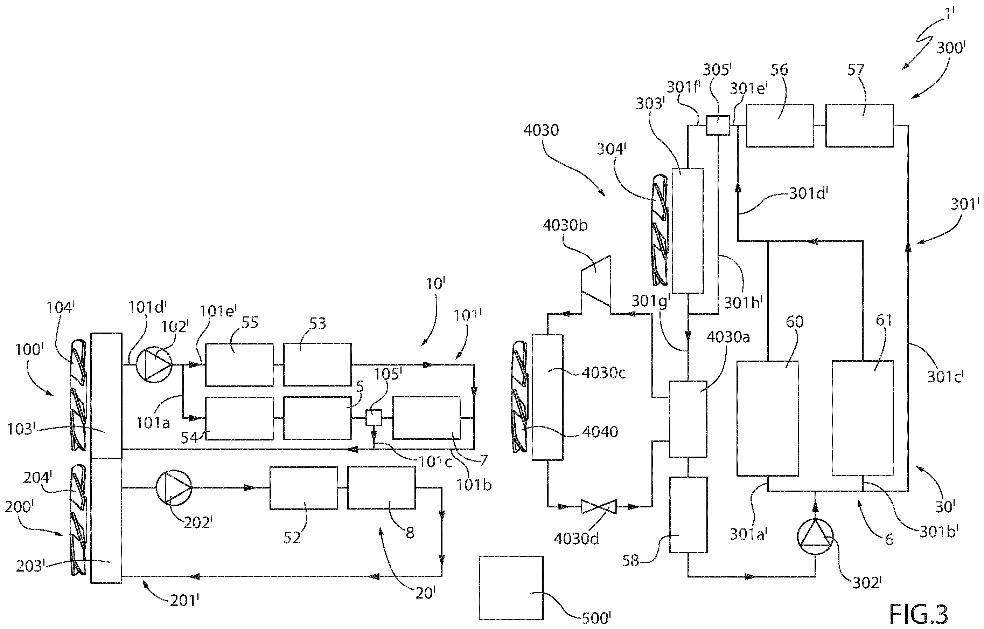

With reference to Figure 3, 1^{I} denotes a work vehicle according to a second embodiment of the present invention. Work vehicle 1^{I} is similar to work vehicle 1 and will be described hereinafter only insofar as it differs therefrom; equal or equivalent parts of work vehicles 1; 1^{I} will be marked, where possible, by the same reference numerals.

Work vehicle 1^{I} differs from work vehicle 1 in that it does not comprise a fourth system and a fourth cooling assembly.

In detail, third system 30^{I} comprises DC/DC converter 56, on-board charger 57 and electrical energy storage means 6. In other words, third cooling assembly 300^{I} is adapted to cool down not only DC/DC converter 56 and on-board charger 57, but also electrical energy storage means 6.

Moreover, third cooling assembly 300^{I} comprises a chiller 4030, which analogously to chiller 403, comprises an evaporator 4030a, a compressor 4030b, a condenser 4030c and a thermal expansion valve 4030d. In further detail, evaporator 4030a is adapted to be crossed by the fluid flowing within circuit 301^{I}.

As shown in Figure 3, circuit 301^{I} comprises:
- a branch 301a^{I} extending from pump 302^{I} towards battery 60 (i.e., adapted to guide the fluid across or in proximity to battery 60);
- a branch 301b^{I} extending from pump 302^{I} towards battery 61 (i.e., adapted to guide the fluid across or in proximity to battery 61);
- a branch 301c^{I} extending from pump 302^{I} towards DC/DC on-board charger 57 and DC/DC converter 56 (i.e., adapted to guide the fluid across or in proximity to on-board charger 57 and DC/DC converter 56).

In detail, chiller 4030 is adapted to undercool electrical energy storage means 6.

Chiller 4030 further comprises a fan 4040, which is adapted to increase the kinetic energy of the air impinging heat exchanger 4030c. Fan 4040 is controllable independently of fan 104^{I}, 204^{I} and/or 304^{I}. In detail, fan 4040 is operatively connected to control unit 500^{I}.

Furthermore, circuit 301^{I} also comprises heater 58.

Preferably, control unit 500^{I} is configured to activate cooling assembly 300^{I} as soon as work vehicle 1^{I} is started, even if work vehicle 1 is stationary.

Cooling assembly 300^{I} further comprises a three-way valve 305^{I}, which is operatively connected to control unit 500^{I} and is settable to:
- a first configuration, wherein it is adapted to allow the passage of the fluid deriving from pump 302^{I} towards heat exchanger 303^{I}; or
- a second configuration, wherein it is adapted to deny the passage of the fluid from pump 302^{I} towards heat exchanger 303^{I} and to allow the passage of the fluid from pump 302^{I} towards chiller 4030.

Circuit 301^{I} further comprises:
- a branch 301d^{I} extending from branches 301a^{I} and 301b^{I};
- a branch 301e^{I} fluidly connecting branches 301c^{I} and 301d^{I} to three-way valve 305^{I};
- a branch 301f^{I} fluidly connecting three-way valve 305^{I} to heat exchanger 303^{I};
- a branch 301g^{I} fluidly connecting heat exchanger 303^{I} to chiller 4030; and
- a branch 301h^{I} fluidly connecting three-way valve 305^{I} to branch 301g^{I}.

In detail, when three-way valve 305^{I} is set to the first configuration, it is adapted to allow the passage of the fluid from branch 301e^{I} towards branch 301f^{I} and to deny the passage of the fluid from branch 301e^{I} towards branch 301h^{I};
when three-way valve 305^{I} is set to the second configuration, it is adapted to deny the passage of the fluid from branch 301e^{I} towards branch 301f^{I} and to allow the passage of the fluid from branch 301e^{I} towards branch 301h^{I}.

Preferably, when the environmental temperature is lower than a temperature threshold (e.g., a temperature greater than but close to preferred operating temperature of batteries 60 and 61), control unit 500^{I} is configured to activate fan 304^{I}, to deactivate or to keep deactivated chiller 4030 and to set three-way valve 305^{I} to the first configuration. In this way, batteries 60 and 61, DC/DC converter 56 and on-board charger 57 may be cooled down without the intervention of compressor 4030b.

Furthermore, when environmental temperature is greater than the temperature threshold, control unit 500^{I} is configured to deactivate fan 304^{I}, to activate chiller 4030 and to set three-way valve 305^{I} to the second configuration. This prevents the heat exchanger 303^{I} from heating the fluid circulating in the circuit 301^{I}.

Control unit 500^{I} may also configured to activate simultaneously both fan 304^{I} and chiller 4030 and to set three-way valve 305^{I} to the first configuration.

In detail, the environmental temperature is the temperature of the air surrounding work vehicle 1^{I} or electrical energy storage means 6 or heat exchanger 303^{I}.

The operation of and work vehicle 1^{I} according to the present invention is similar to the operation of work vehicle 1 and the description thereof will be omitted for the sake of conciseness.

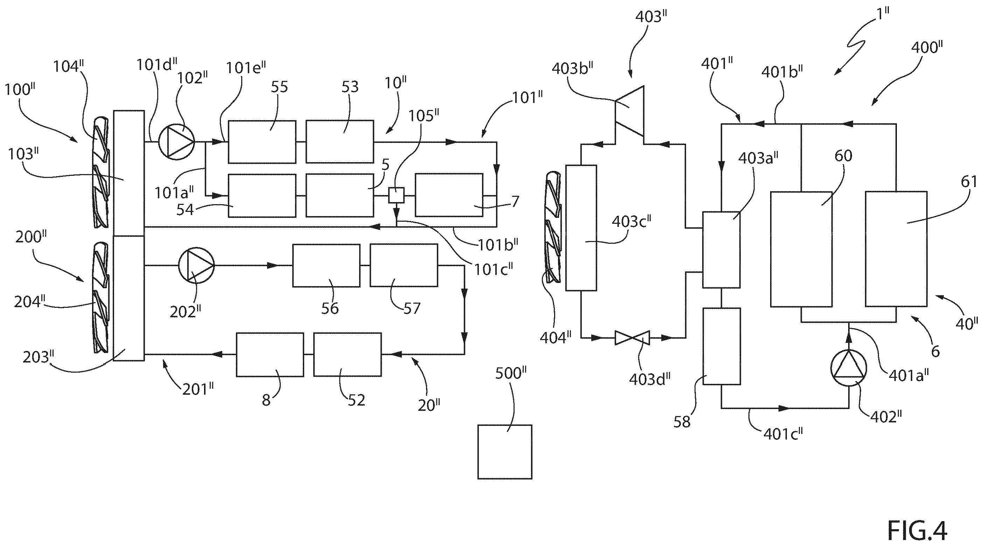

With reference to Figure 4, 1^{II} denotes a work vehicle according to a third embodiment of the present invention. Work vehicle 1^{II} is similar to work vehicle 1 and will be described hereinafter only insofar as it differs therefrom; equal or equivalent parts of work vehicles 1; 1^{II} will be marked, where possible, by the same reference numerals.

Work vehicle 1^{II} differs from work vehicle 1 in that it does not comprise the third system and the third cooling assembly.

In addition, second system 20^{II} comprises DC/DC converter 56 and on-board charger 57, in addition to inverter 52 and generator 8. In detail, second cooling assembly 200^{II} is adapted to cool down in succession converter 56, on-board charger 57, inverter 52 and generator 8. In further detail, the nominal flow rate ranges of DC/DC converter 56, on-board charger 57, inverter 52 and generator 8 at least partially overlap.

Preferably, control unit 500^{II} is configured to activate cooling assembly 200^{II} as soon as work vehicle 1^{II} is started, even if work vehicle 1^{II} is stationary.

Furthermore, when work vehicle 1^{II} is set to the hybrid mode or the electric mode, control unit 500^{II} is configured to activate both cooling assemblies 100^{II} and 200^{II}; when work vehicle 1^{II} is set to the plug-in charging mode, control unit 500^{II} is configured to activate cooling assembly 200^{II} and to deactivate cooling assembly 100^{II}.

The operation of and work vehicle 1^{II} according to the present invention is similar to the operation of work vehicle 1 and the description thereof will be omitted in the following for the sake of conciseness.

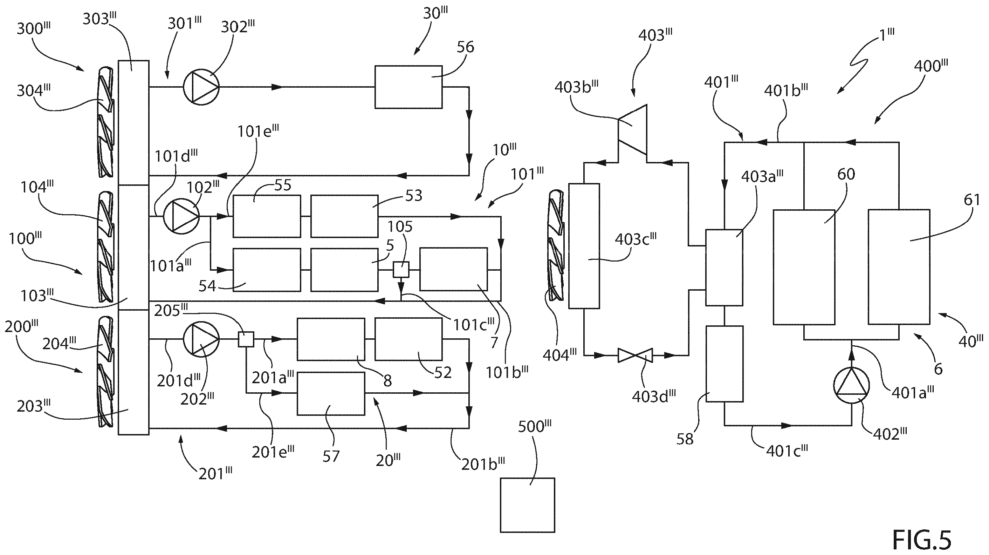

With reference to Figure 5, 1^{III} denotes a work vehicle according to a fourth embodiment of the present invention. Work vehicle 1^{III} is similar to work vehicle 1 and will be described hereinafter only insofar as it differs therefrom; equal or equivalent parts of work vehicles 1; 1^{III} will be marked, where possible, by the same reference numerals.

Work vehicle 1^{III} differs from work vehicle 1 in that second system 20^{III} comprises on-board charger 57, in addition to inverter 52 and generator 8. In addition, circuit 201^{III} comprises:
- a branch 201d^{III} extending between heat exchanger 203^{III} and pump 202^{III};
- a branch 201a^{III} extending from pump 202^{III} and adapted to guide the fluid in succession across or in proximity to generator 8 and inverter 52;
- a branch 201e^{III} extending from pump 202^{III} and adapted to guide the fluid across on in proximity to on-board charger 57; and
- a branch 201b^{III}, which fluidly connects branches 201a^{III} e 201e^{III} to heat exchanger 203^{III}.

Furthermore, second cooling assembly 200^{III} comprises a three-way valve 205^{III}, which is settable to:
- a first configuration, wherein it is adapted to allow the passage of the fluid from pump 202^{III} towards generator 8 and inverter 52 along branch 201a^{III} and adapted to deny the passage of the fluid along branch 201e^{III}; or
- a second configuration, wherein it is adapted to deny the passage of the fluid from pump 202^{III} towards generator 8 and inverter 52 along branch 201a^{III} and adapted to allow the passage of the fluid along branch 201e^{III} towards on-board charger 57.

In addition, third system 30^{III} comprises DC/DC converter 56 only and does not comprise on-board charger 57.

Furthermore, when work vehicle 1^{III} is set to the hybrid mode, control unit 500^{III} is configured to activate cooling assemblies 100^{III}, 200^{III} and 300^{III} and to set three-way valve 205^{III} to the first configuration; when work vehicle 1^{III} is set to the plug-in charging mode, control unit 500 is configured to activate cooling assemblies 200^{III}, 300^{III}, to deactivate cooling assembly 100^{III} and to set the three-way valve 205^{III} to the second configuration; when work vehicle 1^{III} is set to the electric mode, control unit 500^{III} is configured to activate cooling assemblies 100 and 300 and to deactivate cooling assembly 200.

Preferably, control unit 500^{III} is configured to activate cooling assembly 300^{III} as soon as work vehicle 1^{III} is started. More preferably, control unit 500^{III} is configured to activate cooling assembly 300^{III} as soon as work vehicle 1^{III} is started, even if work vehicle 1^{III} is stationary.

The operation of and work vehicle 1^{III} according to the present invention is similar to the operation of work vehicle 1 and the description thereof will be omitted in the following for the sake of conciseness.

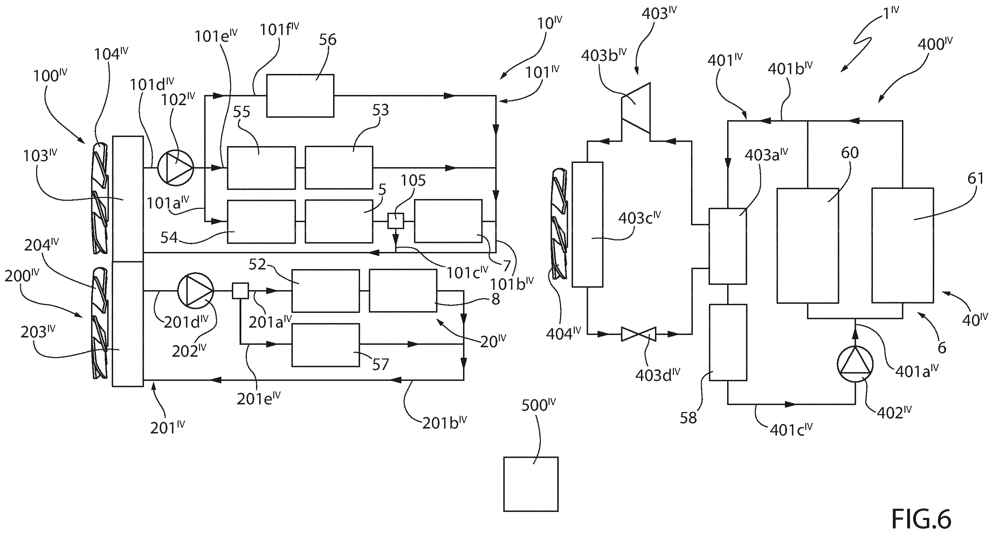

With reference to Figure 6, 1^{IV} denotes a work vehicle according to a fifth embodiment of the present invention. Work vehicle 1^{IV} is similar to work vehicle 1 and will be described hereinafter only insofar as it differs therefrom; equal or equivalent parts of work vehicles 1; 1^{IV} will be marked, where possible, by the same reference numerals.

Work vehicle 1^{IV} differs from work vehicle 1 in that it does not comprise the third system and the third cooling assembly.

Furthermore, first system 10^{IV} comprises DC/DC converter 56, in addition to inverter 55, inverter 53, hydraulic pump motor 54, electrical motor 5 and transmission 7. In detail, circuit 101^{IV} comprises a branch 101f^{IV} extending from pump 102^{IV} and adapted to guide the fluid across on in proximity to DC/DC converter 56. In addition, branch 101b^{IV} fluidly connects branches 101a^{IV}, 101e^{IV} and 101f^{IV} to heat exchanger 103^{IV}.

Second system 20^{IV} comprises on-board charger 57, in addition to inverter 52 and generator 8, and circuit 201^{IV} comprises:
- a branch 201d^{IV} extending between heat exchanger 203^{IV} and pump 202^{IV};
- a branch 201a^{IV} extending from pump 202^{IV} and adapted to guide the fluid in succession across on in proximity to inverter 52 and generator 8;
- a branch 201e^{IV} extending from pump 202^{IV} and adapted to guide the fluid across on in proximity to on-board charger 57; and
- a branch 201b^{Iv}, which fluidly connects branches 201a^{IV} e 201e^{IV} to heat exchanger 203^{IV}.

Furthermore, second cooling assembly 200^{IV} comprises a three-way valve 205^{IV}, which is settable to:
- a first configuration, wherein it is adapted to allow the passage of the fluid from pump 202^{IV} towards generator 8 and inverter 52 along branch 201a^{IV} and adapted to deny the passage of the fluid along branch 201e^{IV}; or
- a second configuration, wherein it is adapted to deny the passage of the fluid from pump 202^{IV} towards generator 8 and inverter 52 along branch 201a^{IV} and adapted to allow the passage of the fluid along branch 201e^{IV} towards on-board charger 57.

Furthermore, when work vehicle 1^{IV} is set to the hybrid mode, control unit 500^{IV} is configured to activate cooling assemblies 100^{IV} and 200^{IV} and to set three-way valve 205^{III} to the first configuration; when work vehicle 1^{IV} is set to the plug-in charging mode, control unit 500 is configured to activate cooling assemblies 100^{IV} and 200^{IV} and to set the three-way valve 205^{IV} to the second configuration; when work vehicle 1^{III} is set to the electric mode, control unit 500^{IV} is configured to activate cooling assembly 100^{IV} and to deactivate cooling assembly 200^{IV}.

Preferably, control unit 500^{V} is configured to activate cooling assembly 100^{IV} as soon as work vehicle 1^{IV} is started, even if work vehicle 1^{IV} is stationary.

The operation of and work vehicle 1^{IV} according to the present invention is similar to the operation of work vehicle 1 and the description thereof will be omitted in the following for the sake of conciseness.

The invention further relates to a method of controlling work vehicle 1; 1^{I}; 1^{II}; 1^{III}; 1^{IV} comprising the step of controlling pump 102; 102^{I}; 102^{II}; 102^{III}; 102^{IV} and pump 202; 202^{I}; 202^{II}; 202^{III}; 202^{IV} independently of each other by means of control unit 500; 500^{I}; 500^{II}; 500^{III}; 500^{IV}.

The method further comprises the step of controlling fan 104; 104^{I}; 104^{II}; 104^{III}; 104^{IV} and fan 204; 204^{I}; 204^{II}; 204^{III}; 204^{IV} independently of each other by means of control unit 500; 500^{I}; 500^{II}; 500^{III}; 500^{IV}.

The method also comprises the step of activating pump 202; 202^{I}; 202^{III}; 202^{IV} and/or fan 204; 204^{I}; 204^{III}; 204^{IV} when work vehicle 1; 1^{I}; 1^{III}; 1^{IV} is set to the hybrid mode and to deactivate second pump 202; 202^{I}; 202^{III}; 202^{IV} and/or second fan 204; 204^{I}; 204^{III}; 204^{IV} when work vehicle 1; 1^{I}; 1^{III}; 1^{IV} is set to the plug-in charging mode or the electric mode.

The method also comprises the step of controlling pump 302 and pump 402 independently of each other and independently of pumps 102 and 202.

The method also comprises the step of controlling pump 302^{I}; 302^{III} independently of pumps 102^{I}; 102^{III} and 202^{I}; 202^{III}.

The method also comprises the step of activating pump 302 and/or fan 304 and to deactivate pumps 102, 202 and/or fans 104, 204 when work vehicle 1 is set to the plug-in charging mode.

The method also comprises the step of activating fan 304^{I}, of deactivating chiller 4030 and of setting three-way valve 305^{I} to the first configuration, by means of control unit 500^{I}, when the environmental temperature is lower than the temperature threshold; and the step of deactivating fan 304^{I}, of activating chiller 4030 and of setting three-way valve 305^{I} to the second configuration, when the environmental temperature is greater than the temperature threshold.

In view of the foregoing, the advantages of work vehicle 1; 1^{I}; 1^{II}; 1^{III}; 1^{IV} and the related control method according to the invention are apparent.

In particular, since work vehicle 1; 1^{I}; 1^{II}, 1^{III}; 1^{IV} comprises at least two different cooling assemblies 100; 100^{I}; 100^{II}; 100^{III}; 100^{IV}, 200; 200^{I}; 200^{II}; 200^{III}; 200^{IV}, which are independently controllable of one another, the total amount of electrical power required to cool the components to be cooled of the work vehicle is optimized. In particular, the number of components that are cooled when cooling is not needed is minimized. As a result, the amount of electrical energy available to be used on board work vehicle 1; 1^{I}; 1^{II}; 1^{III}; 1^{IV} is maximized.

It is clear that modifications can be made to work vehicle 1; 1^{I}; 1^{II}; 1^{III}; 1^{IV} and the related control method which do not extend beyond the scope of protection defined by the claims.

In particular, first system 10; 10^{I}; 10^{II}; 10^{III}; 10^{IV}, second system 20; 20^{I}; 20^{II}; 20^{III}; 20^{IV}, third system 30; 30^{I}; 30^{III} and/or fourth system 40; 40^{II}; 40^{III}; 40^{IV} may share one or more components. In other words, one or more components to be cooled down of work vehicle 1; 1^{I}; 1^{II}; 1^{III}; 1^{IV} may be adapted to be cooled down by more than one of first cooling assembly 100; 100^{I}; 100^{II}; 100^{III}; 100^{1V}, second cooling assembly 200; 200^{I}; 200^{II}; 200^{III}; 200^{IV}, third cooling assembly 300; 300^{I}; 300^{III} and fourth system 400; 400^{II}; 400^{III}; 400^{IV}.

Electrical energy storage means 6 may comprise only one battery 60, 61.

First system, second system, third system and/or fourth system may comprise one or more of thermal engine 4, generator 8, inverter 52, hydraulic system, air system, transmission 7, inverter 53, hydraulic pump motor 54, inverter 55, DC/DC converter 56, electrical energy storage means 6 and on-board charger 57.

According to a not-shown embodiment, when work vehicle 1; 1^{I}; 1^{II}; 1^{III}; 1^{IV} is set to the hybrid mode, both electrical motor 5 and thermal engine 4 are adapted to supply mechanical energy to locomotion means 6.

## Claims

1. Work vehicle (1; 1^{I}; 1^{II}; 1^{III}; 1^{IV}) comprising:
- a main body (2);
- locomotion means (3) adapted to move said main body (2) relative to a reference system;
- a thermal engine (4) and an electrical motor (5), which are adapted to generate mechanical power;
- electrical energy storage means (6) electrically connected to said electrical motor (5);
- a control unit (500; 500^{I}; 500^{II}; 500^{III}; 500^{IV});
- a first system (10; 10^{I}; 10^{II}; 10^{III}; 10^{IV}) and a second system (20; 20^{I}; 20^{II}; 20^{III}; 20^{IV}) to be cooled down, in use;
- a first cooling assembly (100; 100^{I}; 100^{II}; 100^{III}; 100^{IV}) and a second cooling assembly (200; 200^{I}; 200^{II}; 200^{III}; 200^{IV}), which are respectively configured to cool down said first system (10; 10^{I}; 10^{II}; 10^{III}; 10^{IV}) and said second system (20; 20^{I}; 20^{II}; 20^{III}, 20^{IV});
said first cooling assembly (100; 100^{I}; 100^{II}; 100^{III}; 100^{IV}) comprising:
- a first circuit (101; 101^{I}; 101^{II}; 101^{III}; 101^{IV}), which is adapted to be crossed by a first fluid;
- at least one first pump (102; 102^{I}; 102^{II}; 102^{III}; 102^{IV}) configured to circulate said first fluid within said first circuit (101; 101^{I}; 101^{II}; 101^{III}; 101^{IV}); and
- at least one first heat exchanger (103; 103^{I}; 103^{II}; 103^{III}; 103^{IV});
said second cooling assembly (200; 200^{I}; 200^{II}; 200^{III}; 200^{IV}) comprising:
- a second circuit (201; 201^{I}; 201^{II}; 201^{III}; 201^{IV}), which is adapted to be crossed by a second fluid;
- at least one second pump (202; 202^{I}; 202^{II}; 202^{III}; 202^{IV}) configured to circulate said second fluid within said second circuit (201; 201^{I}; 201^{II}; 201^{III}; 201^{IV}); and
- at least one second heat exchanger (203; 203^{I}; 203^{II}; 203^{III}; 203^{IV});
said control unit (500; 500^{I}; 500^{II}; 500^{III}; 500^{IV}) being configured to control, in use, said first pump (102; 102^{I}; 102^{II}; 102^{III}; 102^{IV}) and said second pump (202; 202^{I}; 202^{II}; 202^{III}; 202^{IV}) independently of each other;
said work vehicle further comprises one or more of the following:
- a generator (8) operatively connected to said thermal engine (4) and electrically connected to said electrical energy storage means (6);
- a first inverter (52) electrically connected to said generator (8);
- a hydraulic system;
- an air system configured to cool down, in use, said thermal engine (4);
- a transmission (7), which operatively connects said thermal engine (4) and/or said electrical motor (5) to said locomotion means (3);
- a second inverter (53) electrically connected to said electrical motor (5);
- a hydraulic pump motor (54);
- a third inverter (55) electrically connected to said hydraulic pump motor (54);
- a DC/DC converter (56);
- an on-board charger (57) electrically connected to said electrical energy storage means (6);
said work vehicle is **characterized in that** said first system (10; 10^{I}) comprises said hydraulic pump motor (54), said electrical motor (5), said transmission (7), said second inverter (53) and said third inverter (55);
said second system (20; 20^{I}) comprising said first inverter (52) and said generator (8).

2. Work vehicle according to claim 1, wherein said work vehicle (1; 1^{I}; 1^{II}; 1^{III}; 1^{IV}) is settable to:
- a plug-in charging mode, wherein said electrical energy storage means (6) are charged, in use;
- an electric mode, wherein said electrical motor (5) is operatively connected to said locomotion means (6) and said thermal engine (4) is idle, in use; and
- a hybrid mode, wherein said electrical motor (5) and said thermal engine (4) are adapted to at least indirectly supply said locomotion means (6) with mechanical power.

3. Work vehicle according to claim 1 or 2, wherein said first cooling assembly (100; 100^{I}; 100^{II}; 100^{III}; 100^{IV}) comprises a first fan (104; 104^{I}; 104^{II}; 104^{III}; 104^{IV}), which is adapted to increase the kinetic energy of the air impinging, in use, said first heat exchanger (103; 103^{I}; 103^{II}; 103^{III}; 103^{IV}) and/or said second cooling assembly (200; 200^{I}; 200^{II}; 200^{III}; 200^{IV}) comprises a second fan (204; 204^{I}; 204^{II}; 204^{III}; 204^{IV}), which is adapted to increase the kinetic energy of the air impinging, in use, said second heat exchanger (203; 203^{I}; 203^{II}; 203^{III}; 203^{IV});
said control unit (500; 500^{I}; 500^{II}; 500^{III}; 500^{IV}) being configured to control said first fan (104; 104^{I}; 104^{II}; 104^{III}; 104^{IV}) and said second fan (204; 204^{I}; 204^{II}; 204^{III}; 204^{IV}) independently of each other.

4. Work vehicle according to any one of the foregoing claims, wherein said first system (10; 10^{I}; 10^{II}; 10^{III}; 10^{IV}) and said second system (20; 20^{I}; 20^{II}; 20^{III}; 20^{IV}) each comprise one or more components of said work vehicle (1; 1^{I}; 1^{II}; 1^{III}; 1^{IV}); each said component being associated with a respective nominal cooling flow rate range, which is a range of the flow rate of said respective first or second fluid adapted to remove heat, in use, from said component without causing damages;
wherein when said first system (10; 10^{I}; 10^{II}; 10^{III}; 10^{IV}) comprises more than one component of said work vehicle (1; 1^{I}; 1^{II}; 1^{III}; 1^{IV}) , the components of said first system (10; 10^{I}; 10^{II}; 10^{III}; 10^{IV}) have respective nominal flow rate ranges at least partially overlapping;
wherein when said second system (20; 20^{I}; 20^{II}; 20^{III}; 20^{IV}) comprises more than one component of said work vehicle (1; 1^{I}; 1^{II}; 1^{III}; 1^{IV}) , the components of said second system (20; 20^{I}; 20^{II}; 20^{III}; 20^{IV}) have respective nominal flow rate ranges at least partially overlapping.

5. Work vehicle according to any of the preceding claim, wherein said first system (10; 10^{I}; 10^{II}; 10^{III}; 10^{IV}) and said second system (20; 20^{I}; 20^{II}; 20^{III}; 20^{IV}) each comprise one or more of said thermal engine (4), generator (8), first inverter (52), hydraulic system, air system, transmission (7), second inverter (53), hydraulic pump motor (54), third inverter (55), DC/DC converter (56), electrical energy storage means (6) and on-board charger (57).

6. Work vehicle according to any of the preceding claim, wherein said first system (10^{II}) comprises said hydraulic pump motor (54), said electrical motor (5), said transmission (7), said second inverter (53) and said third inverter (55);
said second system (20^{II}) comprising said first inverter (52), said generator (8), said DC/DC converter (56) and said on-board charger (57).

7. Work vehicle according to any of the preceding claim, wherein said first system (10^{III}) comprises said hydraulic pump motor (54), said electrical motor (5), said transmission (7), said second inverter (53) and said third inverter (55);
said second system (20^{III}) comprising said first inverter (52), said generator (8) and said on-board charger (57);
said second cooling assembly (200^{III}) comprising a first three-way valve (205^{III}), which is settable to:
- a first configuration, wherein it is adapted to allow, in use, the passage of said second fluid from said second pump (202^{III}) towards said generator (8) and said inverter (52) and to deny the passage of said second fluid towards said on-board charger (57); or
- a second configuration, wherein it is adapted to deny, in use, the passage of said second fluid from said second pump (202^{III}) towards said generator (8) and said inverter (52) and to allow the passage of said second fluid towards said on-board charger (57).

8. Work vehicle according to any of the preceding claim, wherein said first system (10^{IV}) comprises said hydraulic pump motor (54), said electrical motor (5), said transmission (7), said second inverter (53), said third inverter (55) and said DC/DC converter (56);
said second system (20^{IV}) comprising said first inverter (52), said generator (8) and said on-board charger (57);
said second cooling assembly (200^{IV}) comprising a first three-way valve (205^{IV}), which is settable to:
- a first configuration, wherein it is adapted to allow, in use, the passage of said second fluid from said second pump (202^{IV}) towards said generator (8) and said inverter (52) and to deny the passage of said second fluid towards said on-board charger (57); or
- a second configuration, wherein it is adapted to deny, in use, the passage of said second fluid from said second pump (202^{IV}) towards said generator (8) and said inverter (52) and to allow the passage of said second fluid towards said on-board charger (57).

9. Work vehicle according to any of the preceding claim, wherein said first circuit (101; 101^{I}; 101^{II}; 101^{III}; 101^{IV}) comprises:
- a first branch (101a; 101a^{I}; 101a^{II}; 101a^{III}; 101a^{IV}) extending from said first pump (102; 102^{I}; 102^{II}; 102^{III}; 102^{IV}) across or in proximity to said hydraulic pump motor (54), said electrical motor (5) and said transmission (7);
- a second branch (101b; 101b^{I}; 101b^{II}; 101b^{III}; 101b^{IV}), which fluidly connects said first branch (101a; 101a^{I}; 101a^{II}; 101a^{III}; 101a^{IV}) to said first heat exchanger (103; 103^{I}; 103^{II}; 103^{III}; 10^{IV});
- a third branch (101c; 101c^{I}; 101c^{II}; 101c^{III}; 101c^{IV}) extending between said first branch (101a; 101a^{I}; 101a^{II}; 101a^{III}; 101a^{IV}) and said second branch (101b; 101b^{I}; 101b^{II}; 101b^{III}; 101b^{IV}); and
- a by-pass valve (105; 105^{I}; 105^{II}; 105^{III}; 105^{IV}), which is fluidly connected to said first branch (101a; 101a^{I}; 101a^{II}; 101a^{III}; 101a^{IV}) and said third branch (101c; 101c^{I}; 101c^{II}; 101c^{III}; 101c^{IV});
wherein said by-pass valve (105; 105^{I}; 105^{II}; 105^{III}; 105^{IV}) is settable to:
- a first configuration, wherein it allows the passage of said first fluid from said first pump (102; 102^{I}; 102^{II}; 102^{III}; 102^{IV}) towards said transmission (7) along said first branch (101a; 101a^{I}; 101a^{II}; 101a^{III}; 101a^{IV}) and denies the passage of said first fluid along said third branch (101c; 101c^{I}; 101c^{II}; 101c^{III}; 101c^{IV}); or
- a second configuration, wherein it denies the passage of said first fluid from said first pump (102; 102^{I}; 102^{II}; 102^{III}; 102^{IV}) towards said transmission (7) along said first branch (101a; 101a^{I}; 101a^{II}; 101a^{III}; 101a^{IV}) and allows the passage of said first fluid along said third branch (101c; 101c^{I}; 101c^{II}; 101c^{III}; 101c^{IV}).

10. Work vehicle according to any one of claims 2, 3 and 11, wherein said control unit (500; 500^{I}) is configured to activate said second pump (202; 202^{I}) and/or said second fan (204; 204^{I}) when said work vehicle (1; 1^{I}) is set, in use, to said hybrid mode and to deactivate said second pump (202; 202^{I}) and/or said second fan (204; 204^{I}) when said work vehicle (1; 1^{I}) is set, in use, to said plug-in charging mode or said electric mode.

11. Work vehicle according to any of the preceding claim, further comprising:
- a third system (30) and a fourth system (40) to be cooled down;
- a third cooling assembly (300) and a fourth cooling assembly (400), which are respectively configured to cool down said third system (30) and said fourth system (40);
said third cooling assembly (300) comprising:
- a third circuit (301), which is adapted to be crossed by a third fluid;
- at least one third pump (302) configured to circulate said third fluid within said third circuit (301); and
- at least one third heat exchanger (303);
said fourth cooling assembly (400) comprising:
- a fourth circuit (401), which is adapted to be crossed by a fourth fluid;
- at least one fourth pump (402) configured to circulate said fourth fluid within said fourth circuit (401); and
- at least one fourth heat exchanger (403);
said control unit (500) being configured to control said third pump (302) and said fourth pump (402) independently of each other and independently of said first and second pumps (102, 202);
said third system (30) comprising said DC/DC converter (56) and said on-board charger (57);
said fourth system (40) comprising said electrical energy storage means (6).

12. Work vehicle according to any of the preceding claim, further comprising a third system (30^{I}) to be cooled down and a third cooling assembly (300^{I}) configured to cool down said third system (30^{I});
said third cooling assembly (300^{I}) comprising:
- a third circuit (301^{I}), which is adapted to be crossed by a third fluid;
- at least one third pump (302^{I}) configured to circulate said third fluid within said third circuit (301^{I}); and
- at least one third heat exchanger (303^{I});
said control unit (500) being configured to control said third pump (302^{I}) independently of said first and second pumps (102^{I}, 202^{I});
said third system (30^{I}) comprising said DC/DC converter (56), said on-board charger (57) and said electrical energy storage means (6).

13. Work vehicle according to claims 2, 3 and 11, wherein said third cooling assembly (300) comprises a third fan (304), which is adapted to increase the kinetic energy of the air impinging, in use, said third heat exchanger (303);
wherein said control unit (500) is configured to activate said third pump (302) and/or said third fan (304) and to deactivate said first and second pumps (102, 202) and/or said first and second fans (104, 204) when said work vehicle (1) is set, in use, to said plug-in charging mode.

14. Work vehicle according to claims 2, 3 and 12, wherein said third cooling assembly (300^{I}) comprises:
- a third fan (304^{I}), which is adapted to increase the kinetic energy of the air impinging, in use, said third heat exchanger (303^{I});
- a chiller (4030), which is adapted to cool down, in use, said third fluid;
said third cooling assembly (300^{I}) further comprising a second three-way valve (305^{I}), which is settable to:
- a first configuration, wherein it is adapted to allow the passage of said third fluid from said third pump (302^{I}) to said third heat exchanger (303^{I}); or
- a second configuration, wherein it is adapted to deny the passage of said third fluid from said third pump (302^{I}) to said third heat exchanger (303^{I}) and to allow the passage of said third fluid from said third pump (302^{I}) towards said chiller (4030).
wherein when an environmental temperature is lower than a temperature threshold, said control unit (500^{I}) is configured to activate, in use, said third fan (304^{I}), to deactivate said chiller (4030) and to set said second three-way valve (305^{I}) to said first configuration; when said environmental temperature is greater than said temperature threshold, said control unit (500^{I}) is configured to deactivate, in use, said third fan (304^{I}), to activate said chiller (4030) and to set said second three-way valve (305^{I}) to said second configuration.

15. Work vehicle according to claim 7 or claim 9 when depending on claim 7, further comprising a third system (30^{III}) to be cooled down and a third cooling assembly (300^{III}) configured to cool down said third system (30^{III);}
said third cooling assembly (300^{III}) comprising:
- a third circuit (301^{III}), which is adapted to be crossed by a third fluid;
- at least one third pump (302^{III}) configured to circulate said third fluid within said third circuit (301^{III}); and
- at least one third heat exchanger (303^{III});
said control unit (500^{III}) being configured to control said third pump (302^{III}) independently of said first and second pumps (102^{III}; 202^{III}); said third system (30^{III}) comprising said DC/DC converter (56).

16. Method of controlling a work vehicle (1; 1^{I}; 1^{II}; 1^{III}; 1^{IV}) according to any one of the foregoing claims; said method comprising the step i) of controlling said first pump (102; 102^{I}; 102^{II}; 102^{III}; 102^{IV}) and said second pump (202; 202^{I}; 202^{II}; 202^{III}; 202^{IV}) independently of each other.

## Patentansprüche

1. Arbeitsfahrzeug (1; 1^{I}; 1^{II}; 1^{III}; 1^{IV}) umfassend:
- einen Grundkörper (2);
- Fortbewegungsmittel (3), die dazu ausgelegt sind, den Grundkörper (2) relativ zu einem Bezugssystem zu bewegen;
- eine Wärmekraftmaschine (4) und einen Elektromotor (5), die dazu ausgelegt sind, mechanische Leistung zu erzeugen;
- elektrische Energiespeicher (6), die elektrisch mit dem Elektromotor (5) verbunden sind;
- eine Steuereinheit (500; 500^{I}; 500^{II}; 500^{III}; 500^{IV});
- ein erstes System (10; 10^{I}; 10^{II}; 10^{III}; 10^{IV}) und ein zweites System (20; 20^{I}; 20^{II}; 20^{III}; 20^{IV}), die im Gebrauch abzukühlen sind;
- eine erste Kühlbaugruppe (100; 100^{I}; 100^{II}; 100^{III}; 100^{IV}) und eine zweite Kühlbaugruppe (200; 200^{I}; 200^{II}; 200^{III}; 200^{IV}), die jeweils konfiguriert sind, um das erste System (10; 10^{I}; 10^{II}; 10^{III}; 10^{IV}) bzw. das zweite System (20; 20^{I}; 20^{II}; 20^{III}; 20^{IV}) zu kühlen;
die erste Kühlbaugruppe (100; 100^{I}; 100^{II}; 100^{III}; 100^{IV}) umfassend:
- einen ersten Kreislauf (101; 101^{I}; 101^{II}; 101^{III}; 101^{IV}), der dazu ausgelegt ist, von einem ersten Fluid durchströmt zu werden;
- mindestens eine erste Pumpe (102; 102^{I}; 102^{II}; 102^{III}; 102^{IV}), die konfiguriert ist, um das erste Fluid innerhalb des ersten Kreislaufs (101; 101^{I}; 101^{II}; 101^{III}; 101^{IV}) zirkulieren zu lassen; und
- mindestens einen ersten Wärmetauscher (103; 103^{I}; 103^{II}; 103^{III}; 103^{IV});
die zweite Kühlbaugruppe (200; 200^{I}; 200^{II}; 200^{III}; 200^{IV}) umfassend:
- einen zweiten Kreislauf (201; 201^{I}; 201^{II}; 201^{III}; 201^{IV}), der dazu ausgelegt ist, von einem zweiten Fluid durchströmt zu werden;
- mindestens eine zweite Pumpe (202; 202^{I}; 202^{II}; 202^{III}; 202^{IV}), die konfiguriert ist, um das zweite Fluid innerhalb des zweiten Kreislaufs (201; 201^{I}; 201^{II}; 201^{III}; 201^{IV}) zirkulieren zu lassen; und
- mindestens einen zweiten Wärmetauscher (203; 203^{I}; 203^{II}; 203^{III}; 203^{IV});
wobei die Steuereinheit (500; 500^{I}; 500^{II}; 500^{III}; 500^{IV}) konfiguriert ist, um im Gebrauch die erste Pumpe (102; 102^{I}; 102^{II}; 102^{III}; 102^{IV}) und die zweite Pumpe (202; 202^{I}; 202^{II}; 202^{III}; 202^{IV}) unabhängig voneinander zu steuern;
wobei das Arbeitsfahrzeug ferner eines oder mehrere der folgenden umfasst:
- einen Generator (8), der funktionell mit der Wärmekraftmaschine (4) verbunden und elektrisch mit dem elektrischen Energiespeicher (6) verbunden ist;
- einen ersten Umrichter (52), der elektrisch mit dem Generator (8) verbunden ist;
- ein hydraulisches System;
- ein Luftsystem, das konfiguriert ist, um im Gebrauch die Wärmekraftmaschine (4) zu kühlen;
- ein Getriebe (7), das die Wärmekraftmaschine (4) und/oder den Elektromotor (5) funktionell mit den Fortbewegungsmitteln (3) verbindet;
- einen zweiten Umrichter (53), der elektrisch mit dem Elektromotor (5) verbunden ist;
- einen Hydraulikpumpenmotor (54);
- einen dritten Umrichter (55), der elektrisch mit dem Hydraulikpumpenmotor (54) verbunden ist;
- einen DC/DC-Wandler (56);
- ein bordeigenes Ladegerät (57), das elektrisch mit dem elektrischen Energiespeicher (6) verbunden ist;
das Arbeitsfahrzeug ist **dadurch gekennzeichnet, dass** das erste System (10; 10^{I}) den Hydraulikpumpenmotor (54), den Elektromotor (5), das Getriebe (7), den zweiten Umrichter (53) und den dritten Umrichter (55) umfasst;
wobei das zweite System (20; 20^{I}) den ersten Umrichter (52) und den Generator (8) umfasst.

2. Arbeitsfahrzeug nach Anspruch 1, wobei das Arbeitsfahrzeug (1; 1^{I}; 1^{II}; 1^{III}; 1^{IV}) einstellbar ist auf:
- einen Plug-in-Lademodus, wobei die elektrischen Energiespeicher (6) im Gebrauch geladen werden;
- einen elektrischen Modus, wobei der Elektromotor (5) funktionell mit den Fortbewegungsmitteln (6) verbunden ist und die Wärmekraftmaschine (4) im Gebrauch im Leerlauf ist; und
- einen Hybridmodus, wobei der Elektromotor (5) und die Wärmekraftmaschine (4) dazu ausgelegt sind, die Fortbewegungsmittel (6) zumindest mittelbar mit mechanischer Leistung zu versorgen.

3. Arbeitsfahrzeug nach Anspruch 1 oder 2, wobei die erste Kühlbaugruppe (100; 100^{I}; 100^{II}; 100^{III}; 100^{IV}) einen ersten Lüfter (104; 104^{I}; 104^{II}; 104^{III}; 104^{IV}) umfasst, der dazu ausgelegt ist, die kinetische Energie der Luft zu erhöhen, die im Gebrauch auf den ersten Wärmetauscher (103; 103^{I}; 103^{II}; 103^{III}; 103^{IV}) auftrifft, und/oder die zweite Kühlbaugruppe (200; 200^{I}; 200^{II}; 200^{III}; 200^{IV}) einen zweiten Lüfter (204; 204^{I}; 204^{II}; 204^{III}; 204^{IV}) umfasst, der dazu ausgelegt ist, die kinetische Energie der Luft zu erhöhen, die im Gebrauch auf den zweiten Wärmetauscher (203; 203^{I}; 203^{II}; 203^{III}; 203^{IV}) auftrifft;
wobei die Steuereinheit (500; 500^{I}; 500^{II}; 500^{III}; 500^{IV}) konfiguriert ist, um den ersten Lüfter (104; 104^{I}; 104^{II}; 104^{III}; 104^{IV}) und den zweiten Lüfter (204; 204^{I}; 204^{II}; 204^{III}; 204^{IV}) unabhängig voneinander zu steuern.

4. Arbeitsfahrzeug nach einem der vorstehenden Ansprüche, wobei das erste System (10; 10^{I}; 10^{II}; 10^{III}; 10^{IV}) und das zweite System (20; 20^{I}; 20^{II}; 20^{III}; 20^{IV}) jeweils eine oder mehrere Komponenten des Arbeitsfahrzeugs (1; 1^{I}; 1^{II}; 1^{III}; 1^{IV}) umfassen; wobei jede Komponente mit einem jeweiligen nominalen Kühlströmungsgeschwindigkeitsbereich assoziiert ist, welcher ein Bereich der Strömungsgeschwindigkeit des jeweiligen ersten oder zweiten Fluids ist, der dazu geeignet ist, im Gebrauch Wärme von der Komponente zu entfernen, ohne Schäden zu verursachen;
wobei, wenn das erste System (10; 10^{I}; 10^{II}; 10^{III}; 10^{IV}) mehr als eine Komponente des Arbeitsfahrzeugs (1; 1^{I}; 1^{II}; 1^{III}; 1^{IV}) umfasst, die Komponenten des ersten Systems (10; 10^{I}; 10^{II}; 10^{III}; 10^{IV}) jeweilige nominale Strömungsgeschwindigkeitsbereiche aufweisen, die sich zumindest teilweise überlappen;
wobei, wenn das zweite System (20; 20^{I}; 20^{II}; 20^{III}; 20^{IV}) mehr als eine Komponente des Arbeitsfahrzeugs (1; 1^{I}; 1^{II}; 1^{III}; 1^{IV}) umfasst, die Komponenten des zweiten Systems (20; 20^{I}; 20^{II}; 20^{III}; 20^{IV}) jeweilige nominale Strömungsgeschwindigkeitsbereiche aufweisen, die sich zumindest teilweise überlappen.

5. Arbeitsfahrzeug nach einem der vorstehenden Ansprüche, wobei das erste System (10; 10^{I}; 10^{II}; 10^{III}; 10^{IV}) und das zweite System (20; 20^{I}; 20^{II}; 20^{III}; 20^{IV}) jeweils eines oder mehrere der Wärmekraftmaschine (4), des Generators (8), des ersten Umrichters (52), des Hydrauliksystems, des Luftsystems, des Getriebes (7), des zweiten Umrichters (53), des Hydraulikpumpenmotors (54), des dritten Umrichters (55), des DC/DC-Wandlers (56), des elektrischen Energiespeichers (6) und des bordeigenen Ladegeräts (57) umfassen.

6. Arbeitsfahrzeug nach einem der vorstehenden Ansprüche, wobei das erste System (10^{II}) den Hydraulikpumpenmotor (54), den Elektromotor (5), das Getriebe (7), den zweiten Umrichter (53) und den dritten Umrichter (55) umfasst;
wobei das zweite System (20^{II}) den ersten Umrichter (52), den Generator (8), den DC/DC-Wandler (56) und das bordeigene Ladegerät (57) umfasst.

7. Arbeitsfahrzeug nach einem der vorstehenden Ansprüche, wobei das erste System (10^{III}) den Hydraulikpumpenmotor (54), den Elektromotor (5), das Getriebe (7), den zweiten Umrichter (53) und den dritten Umrichter (55) umfasst;
wobei das zweite System (20^{III}), den ersten Umrichter (52), den Generator (8) und das bordeigene Ladegerät (57) umfasst;
wobei die zweite Kühlbaugruppe (200^{III}) ein erstes Dreiwegeventil (205^{III}) umfasst, welches einstellbar ist auf:
- eine erste Konfiguration, wobei es dazu ausgelegt ist, im Gebrauch den Durchgang des zweiten Fluids von der zweiten Pumpe (202^{III}) zu dem Generator (8) und dem Umrichter (52) zu ermöglichen und den Durchgang des zweiten Fluids zu dem bordeigenen Ladegerät (57) zu verweigern; oder
- eine zweite Konfiguration, wobei es dazu ausgelegt ist, im Gebrauch den Durchgang des zweiten Fluids von der zweiten Pumpe (202^{III}) zu dem Generator (8) und dem Umrichter (52) zu verweigern und den Durchgang des zweiten Fluids zu dem bordeigenen Ladegerät (57) zu ermöglichen.

8. Arbeitsfahrzeug nach einem der vorstehenden Ansprüche, wobei das erste System (10^{IV}) den Hydraulikpumpenmotor (54), den Elektromotor (5), das Getriebe (7), den zweiten Umrichter (53), den dritten Umrichter (55) und den DC/DC-Wandler (56) umfasst;
wobei das zweite System (20^{IV}), den ersten Umrichter (52), den Generator (8) und das bordeigene Ladegerät (57) umfasst;
wobei die zweite Kühlbaugruppe (200^{IV}) ein erstes Dreiwegeventil (205^{IV}) umfasst, welches einstellbar ist auf:
- eine erste Konfiguration, wobei es dazu ausgelegt ist, im Gebrauch den Durchgang des zweiten Fluids von der zweiten Pumpe (202^{IV}) zu dem Generator (8) und dem Umrichter (52) zu ermöglichen und den Durchgang des zweiten Fluids zu dem bordeigenen Ladegerät (57) zu verweigern; oder
- eine zweite Konfiguration, wobei es dazu ausgelegt ist, im Gebrauch den Durchgang des zweiten Fluids von der zweiten Pumpe (202^{IV}) zu dem Generator (8) und dem Umrichter (52) zu verweigern und den Durchgang des zweiten Fluids zu dem bordeigenen Ladegerät (57) zu ermöglichen.

9. Arbeitsfahrzeug nach einem der vorstehenden Ansprüche, wobei der erste Kreislauf (101; 101^{I}; 101^{II}; 101^{III}; 101^{IV}) umfasst:
- einen ersten Zweig (101a; 101a^{I}; 101a^{II}; 101a^{III}; 101a^{IV}), der sich von der ersten Pumpe (102; 102^{I}; 102^{II}; 102^{III}; 102^{IV}) über oder in der Nähe des Hydraulikpumpenmotors (54), des Elektromotors (5) und des Getriebes (7) erstreckt;
- einen zweiten Zweig (101b; 101b^{I}; 101b^{II}; 101b^{III}; 101b^{IV}), der den ersten Zweig (101a; 101a^{I}; 101a^{II}; 101a^{III}; 101a^{IV}) fluidisch mit dem ersten Wärmetauscher (103; 103^{I}; 103^{II}; 103^{III}; 103^{IV}) verbindet;
- einen dritten Zweig (101c; 101c^{I}; 101c^{II}; 101c^{III}; 101c^{IV}), der sich zwischen dem ersten Zweig (101a; 101a^{I}; 101a^{II}; 101a^{III}; 101a^{IV}) und dem zweiten Zweig (101b; 101b^{I}; 101b^{II}; 101b^{III}; 101b^{IV}) erstreckt; und
- ein Bypass-Ventil (105; 105^{I}; 105^{II}; 105^{III}; 105^{IV}), das fluidisch mit dem ersten Zweig (101a; 101a^{I}; 101a^{II}; 101a^{III}; 101a^{IV}) und dem dritten Zweig (101c; 101c^{I}; 101c^{II}; 101c^{III}; 101c^{IV}) verbunden ist;
wobei das Bypass-Ventil (105; 105^{I}; 105^{II}; 105^{III}; 105^{IV}) einstellbar ist auf:
- eine erste Konfiguration, wobei es den Durchgang des ersten Fluids von der ersten Pumpe (102; 102^{I}; 102^{II}; 102^{III}; 102^{IV}) zu dem Getriebe (7) entlang dem ersten Zweig (101a; 101a^{I}; 101a^{II}; 101a^{III}; 101a^{IV}) ermöglicht und den Durchgang des ersten Fluids entlang dem dritten Zweig (101c; 101c^{I}; 101c^{II}; 101c^{III}; 101c^{IV}) verweigert; oder
- eine zweite Konfiguration, wobei es den Durchgang des ersten Fluids von der ersten Pumpe (102; 102^{I}; 102^{II}; 102^{III}; 102^{IV}) zu dem Getriebe (7) entlang dem ersten Zweig (101a; 101a^{I}; 101a^{II}; 101a^{III}; 101a^{IV}) verweigert und den Durchgang des ersten Fluids entlang dem dritten Zweig (101c; 101c^{I}; 101c^{II}; 101c^{III}; 101c^{IV}) ermöglicht.

10. Arbeitsfahrzeug nach einem der Ansprüche 2, 3 und 11, wobei die Steuereinheit (500; 500^{I}) konfiguriert ist, um die zweite Pumpe (202; 202^{I}) und/oder den zweiten Lüfter (204; 204^{I}) zu aktivieren, wenn das Arbeitsfahrzeug (1; 1^{I}) im Gebrauch auf den Hybridmodus eingestellt ist, und die zweite Pumpe (202; 202^{I}) und/oder den zweiten Lüfter (204; 204^{I}) zu deaktivieren, wenn das Arbeitsfahrzeug (1; 1^{I}) im Gebrauch auf den Plug-in-Lademodus oder den Elektromodus eingestellt ist.

11. Arbeitsfahrzeug nach einem der vorstehenden Ansprüche, ferner umfassend:
- ein drittes System (30) und ein viertes System (40), die abgekühlt werden sollen;
- eine dritte Kühlbaugruppe (300) und eine vierte Kühlbaugruppe (400), die jeweils konfiguriert sind, um das dritte System (30) und das vierte System (40) zu kühlen;
die dritte Kühlbaugruppe (300) umfassend:
- einen dritten Kreislauf (301), der dazu ausgelegt ist, von einem dritten Fluid durchströmt zu werden;
- mindestens eine dritte Pumpe (302), die konfiguriert ist, um das dritte Fluid innerhalb des dritten Kreislaufs (301) zirkulieren zu lassen; und
- mindestens einen dritten Wärmetauscher (303);
die vierte Kühlbaugruppe (400) umfassend:
- einen vierten Kreislauf (401), der dazu ausgelegt ist, von einem vierten Fluid durchströmt zu werden;
- mindestens eine vierte Pumpe (402), die konfiguriert ist, um das vierte Fluid innerhalb des vierten Kreislaufs (401) zirkulieren zu lassen; und
- mindestens einen vierten Wärmetauscher (403);
wobei die Steuereinheit (500) konfiguriert ist, um die dritte Pumpe (302) und die vierte Pumpe (402) unabhängig voneinander und unabhängig von der ersten und zweiten Pumpe (102, 202) zu steuern;
wobei das dritte System (30) den DC/DC-Wandler (56) und das bordeigene Ladegerät (57) umfasst;
wobei das vierte System (40) den elektrischen Energiespeicher (6) umfasst.

12. Arbeitsfahrzeug nach einem der vorstehenden Ansprüche, ferner umfassend ein drittes System (30^{I}) zum Herunterkühlen und eine dritte Kühlbaugruppe (300^{I}), die konfiguriert ist, um das dritte System (30^{I}) herunterzukühlen;
die dritte Kühlbaugruppe (300^{I}) umfassend:
- einen dritten Kreislauf (301^{I}), der dazu ausgelegt ist, von einem dritten Fluid durchströmt zu werden;
- mindestens eine dritte Pumpe (302^{I}), die konfiguriert ist, um das dritte Fluid innerhalb des dritten Kreislaufs (301^{I}) zirkulieren zu lassen; und
- mindestens einen dritten Wärmetauscher (303^{I});
wobei die Steuereinheit (500) konfiguriert ist, um die dritte Pumpe (302^{I}) unabhängig von der ersten und zweiten Pumpe (102^{I}, 202^{I}) zu steuern;
wobei das dritte System (30^{I}) den DC/DC-Wandler (56), das bordeigene Ladegerät (57) und den elektrischen Energiespeicher (6) umfasst.

13. Arbeitsfahrzeug nach den Ansprüchen 2, 3 und 11, wobei die dritte Kühlbaugruppe (300) einen dritten Lüfter (304) umfasst, welcher dazu ausgelegt ist, die kinetische Energie der Luft zu erhöhen, die im Gebrauch auf den dritten Wärmetauscher (303) auftrifft;
wobei die Steuereinheit (500) konfiguriert ist, um die dritte Pumpe (302) und/oder den dritten Lüfter (304) zu aktivieren und die erste und zweite Pumpe (102, 202) und/oder den ersten und zweiten Lüfter (104, 204) zu deaktivieren, wenn das Arbeitsfahrzeug (1) im Gebrauch auf den Plug-in-Lademodus eingestellt ist.

14. Arbeitsfahrzeug nach den Ansprüchen 2, 3 und 12, wobei die dritte Kühlbaugruppe (300^{I}) umfasst:
- einen dritten Lüfter (304^{I}), der dazu ausgelegt ist, die kinetische Energie der Luft zu erhöhen, die im Gebrauch auf den dritten Wärmetauscher (303^{I}) auftrifft;
- einen Kühler (4030), der dazu ausgelegt ist, im Gebrauch das dritte Fluid zu kühlen;
wobei die dritte Kühlbaugruppe (300^{I}) ferner ein zweites Dreiwegeventil (305^{I}) umfasst, welches einstellbar ist auf:
- eine erste Konfiguration, wobei sie dazu ausgelegt ist, den Durchgang des dritten Fluids von der dritten Pumpe (302^{I}) zu dem dritten Wärmetauscher (303^{I}) zu ermöglichen; oder
- eine zweite Konfiguration, wobei sie dazu ausgelegt ist, den Durchgang des dritten Fluids von der dritten Pumpe (302^{I}) zu dem dritten Wärmetauscher (303^{I}) zu verweigern und den Durchgang des dritten Fluids von der dritten Pumpe (302^{I}) zu dem Kühler (4030) zu ermöglichen.
wobei, wenn eine Umgebungstemperatur niedriger als ein Temperaturschwellenwert ist, die Steuereinheit (500^{I}) konfiguriert ist, um im Gebrauch den dritten Lüfter (304^{I}) zu aktivieren, den Kühler (4030) zu deaktivieren und das zweite Dreiwegeventil (305^{I}) auf die erste Konfiguration einzustellen; wenn die Umgebungstemperatur größer als der Temperaturschwellenwert ist, die Steuereinheit (500^{I}) konfiguriert ist, um im Gebrauch den dritten Lüfter (304^{I}) zu deaktivieren, den Kühler (4030) zu aktivieren und das zweite Dreiwegeventil (305^{I}) auf die zweite Konfiguration einzustellen.

15. Arbeitsfahrzeug nach Anspruch 7 oder Anspruch 9, wenn abhängig von Anspruch 7, ferner umfassend ein drittes System (30^{III}) zum Herunterkühlen und eine dritte Kühlbaugruppe (300^{III}), die konfiguriert ist, um das dritte System (30^{III}) herunterzukühlen;
die dritte Kühlbaugruppe (300^{III}) umfassend:
- einen dritten Kreislauf (301^{III}), der dazu ausgelegt ist, von einem dritten Fluid durchströmt zu werden;
- mindestens eine dritte Pumpe (302^{III}), die konfiguriert ist, um das dritte Fluid innerhalb des dritten Kreislaufs (301^{III}) zirkulieren zu lassen; und
- mindestens einen dritten Wärmetauscher (303^{III});
wobei die Steuereinheit (500^{III}) konfiguriert ist, um die dritte Pumpe (302^{III}) unabhängig von der ersten und zweiten Pumpe (102^{III}; 202^{III}) zu steuern; wobei das dritte System (30^{III}) den DC/DC-Wandler (56) umfasst.

16. Verfahren zum Steuern eines Arbeitsfahrzeugs (1; 1^{I}; 1^{II}; 1^{III}; 1^{IV}) nach einem der vorstehenden Ansprüche; wobei das Verfahren den Schritt i) des Steuerns der ersten Pumpe (102; 102^{I}; 102^{II}; 102^{III}; 102^{IV}) und der zweiten Pumpe (202; 202^{I}; 202^{II}; 202^{III}; 202^{IV}) unabhängig voneinander umfasst.

## Revendications

1. Véhicule de travail (1 ; 1^{I} ; 1^{II} ; 1^{III} ; 1^{IV}) comprenant :
- un corps principal (2) ;
- un moyen de locomotion (3) adapté pour déplacer ledit corps principal (2) par rapport à un système de référence ;
- un moteur thermique (4) et un moteur électrique (5), qui sont adaptés pour générer une puissance mécanique ;
- un moyen de stockage d'énergie électrique (6) connecté électriquement audit moteur électrique (5) ;
- une unité de commande (500 ; 500^{I} ; 500^{II} ; 500^{III} ; 500^{IV}) ;
- un premier système (10 ; 10^{I} ; 10^{II} ; 10^{III} ; 10^{IV}) et un second système (20 ; 20^{I} ; 20^{II} ; 20^{III} ; 20^{IV}) à refroidir, lors de l'utilisation ;
- un premier ensemble de refroidissement (100 ; 100^{I} ; 100^{II} ; 100^{III} ; 100^{IV}) et un second ensemble de refroidissement (200 ; 200^{I} ; 200^{II} ; 200^{III} ; 200^{IV}), qui sont respectivement configurés pour refroidir ledit premier système (10 ; 10^{I} ; 10^{II} ; 10^{III} ; 10^{IV}) et ledit second système (20 ; 20^{I} ; 20^{II} ; 20^{III} ; 20^{IV}) ;
ledit premier ensemble de refroidissement (100 ; 100^{I} ; 100^{II} ; 100^{III} ; 100^{IV}) comprenant :
- un premier circuit (101 ; 101^{I} ; 101^{II} ; 101^{III} ; 101^{IV}), qui est adapté pour être traversé par un premier fluide ;
- au moins une première pompe (102 ; 102^{I} ; 102^{II} ; 102^{III} ; 102^{IV}) configurée pour faire circuler ledit premier fluide à l'intérieur dudit premier circuit (101 ; 101^{I} ; 101^{II} ; 101^{III} ; 101^{IV}) ; et
- au moins un premier échangeur de chaleur (103 ; 103^{I} ; 103^{II} ; 103^{III} ; 103^{IV}) ;
ledit second ensemble de refroidissement (200 ; 200^{I} ; 200^{II} ; 200^{III} ; 200^{IV}) comprenant :
- un second circuit (201 ; 201^{I} ; 201^{II} ; 201^{III} ; 201^{IV}), qui est adapté pour être traversé par un second fluide ;
- au moins une seconde pompe (202 ; 202^{I} ; 202^{II} ; 202^{III} ; 202^{IV}) configurée pour faire circuler ledit second fluide à l'intérieur dudit second circuit (201 ; 201^{I} ; 201^{II} ; 201^{III} ; 201^{IV}) ; et
- au moins un second échangeur de chaleur (203 ; 203^{I} ; 203^{II} ; 203^{III} ; 203^{IV}) ;
ladite unité de commande (500 ; 500^{I} ; 500^{II} ; 500^{III} ; 500^{IV}) étant configurée pour commander, lors de l'utilisation, ladite première pompe (102 ; 102^{I} ; 102^{II} ; 102^{III} ; 102^{IV}) et ladite seconde pompe (202 ; 202^{I} ; 202^{II} ; 202^{III} ; 202^{IV}) indépendamment l'une de l'autre ;
ledit véhicule de travail comprend en outre un ou plusieurs des éléments suivants :
- un générateur (8) relié de manière fonctionnelle audit moteur thermique (4) et connecté électriquement audit moyen de stockage d'énergie électrique (6) ;
- un premier onduleur (52) connecté électriquement audit générateur (8) ;
- un système hydraulique ;
- un système d'air configuré pour refroidir, lors de l'utilisation, ledit moteur thermique (4) ;
- une transmission (7), qui relie de manière fonctionnelle ledit moteur thermique (4) et/ou ledit moteur électrique (5) audit moyen de locomotion (3) ;
- un deuxième onduleur (53) connecté électriquement audit moteur électrique (5) ;
- un moteur de pompe hydraulique (54) ;
- un troisième onduleur (55) connecté électriquement audit moteur de pompe hydraulique (54) ;
- un convertisseur CC/CC (56) ;
- un chargeur embarqué (57) connecté électriquement audit moyen de stockage d'énergie électrique (6) ;
ledit véhicule de travail est **caractérisé en ce que** ledit premier système (10 ; 10^{I}) comprend ledit moteur de pompe hydraulique (54), ledit moteur électrique (5), ladite transmission (7), ledit deuxième onduleur (53) et ledit troisième onduleur (55) ;
ledit second système (20 ; 20^{I}) comprenant ledit premier onduleur (52) et ledit générateur (8).

2. Véhicule de travail selon la revendication 1, dans lequel ledit véhicule de travail (1 ; 1^{I} ; 1^{II} ; 1^{III} ; 1^{IV}) peut être réglé sur :
- un mode de charge branché, dans lequel ledit moyen de stockage d'énergie électrique (6) est chargé, lors de l'utilisation ;
- un mode électrique, dans lequel ledit moteur électrique (5) est relié de manière fonctionnelle audit moyen de locomotion (6) et ledit moteur thermique (4) est à l'arrêt, lors de l'utilisation ; et
- un mode hybride, dans lequel ledit moteur électrique (5) et ledit moteur thermique (4) sont adaptés pour fournir au moins indirectement une puissance mécanique audit moyen de locomotion (6).

3. Véhicule de travail selon la revendication 1 ou 2, dans lequel ledit premier ensemble de refroidissement (100 ; 100^{I} ; 100^{II} ; 100^{III} ; 100^{IV}) comprend un premier ventilateur (104 ; 104^{I} ; 104^{II} ; 104^{III} ; 104^{IV}), qui est adapté pour augmenter l'énergie cinétique de l'air frappant, lors de l'utilisation, ledit premier échangeur de chaleur (103 ; 103^{I} ; 103^{II} ; 103^{III} ; 103^{IV}) et/ou ledit second ensemble de refroidissement (200 ; 200^{I} ; 200^{II} ; 200^{III} ; 200^{IV}) comprend un second ventilateur (204 ; 204^{I} ; 204^{II} ; 204^{III} ; 204^{IV}), qui est adapté pour augmenter l'énergie cinétique de l'air frappant, lors de l'utilisation, ledit second échangeur de chaleur (203 ; 203^{I} ; 203^{II} ; 203^{III} ; 203^{IV}) ;
ladite unité de commande (500 ; 500^{I} ; 500^{II} ; 500^{III} ; 500^{IV}) étant configurée pour commander ledit premier ventilateur (104 ; 104^{I} ; 104^{II} ; 104^{III} ; 104^{IV}) et ledit second ventilateur (204 ; 204^{I} ; 204^{II} ; 204^{III} ; 204^{IV}) indépendamment l'un de l'autre.

4. Véhicule de travail selon l'une quelconque des revendications précédentes, dans lequel ledit premier système (10 ; 10^{I} ; 10^{II} ; 10^{III} ; 10^{IV}) et ledit second système (20 ; 20^{I} ; 201^{I} ; 20^{III} ; 20^{IV}) comprennent chacun un ou plusieurs composants dudit véhicule de travail (1 ; 1^{I} ; 1^{II} ; 1^{III} ; 1^{IV}) ; chaque dit composant étant associé à une plage de débit de refroidissement nominal respective, qui est une plage du débit dudit premier ou second fluide respectif adapté pour éliminer, lors de l'utilisation, la chaleur dudit composant sans causer de dommages ;
dans lequel lorsque ledit premier système (10 ; 10^{I} ; 10^{II} ; 10^{III} ; 10^{IV}) comprend plus d'un composant dudit véhicule de travail (1 ; 1^{I} ; 1^{II} ; 1^{III} ; 1^{IV}), les composants dudit premier système (10 ; 10^{I} ; 10^{II} ; 10^{III} ; 10^{IV}) ont des plages de débits nominaux respectives qui se chevauchent au moins partiellement ;
dans lequel, lorsque ledit second système (20 ; 20^{I} ; 201^{I} ; 20^{III} ; 20^{IV}) comprend plus d'un composant dudit véhicule de travail (1 ; 1^{I} ; 1^{II} ; 1^{III} ; 1^{IV}), les composants dudit second système (20 ; 20^{I} ; 20^{II} ; 20^{III} ; 20^{IV}) ont des plages de débits nominaux respectives qui se chevauchent au moins partiellement.

5. Véhicule de travail selon l'une quelconque revendication précédente, dans lequel ledit premier système (10 ; 10^{I} ; 10^{II} ; 10^{III} ; 10^{IV}) et ledit second système (20 ; 20^{I} ; 201^{I} ; 20^{III} ; 20^{IV}) comprennent chacun un ou plusieurs parmi lesdits moteur thermique (4), générateur (8), premier onduleur (52), système hydraulique, système d'air, transmission (7), deuxième onduleur (53), moteur de pompe hydraulique (54), troisième onduleur (55), convertisseur CC/CC (56), moyen de stockage d'énergie électrique (6) et chargeur embarqué (57).

6. Véhicule de travail selon l'une quelconque revendication précédente, dans lequel ledit premier système (10^{II}) comprend ledit moteur de pompe hydraulique (54), ledit moteur électrique (5), ladite transmission (7), ledit deuxième onduleur (53) et ledit troisième onduleur (55) ;
ledit second système (20^{II}) comprenant ledit premier onduleur (52), ledit générateur (8), ledit convertisseur CC/CC (56) et ledit chargeur embarqué (57).

7. Véhicule de travail selon l'une quelconque revendication précédente, dans lequel ledit premier système (10^{III}) comprend ledit moteur de pompe hydraulique (54), ledit moteur électrique (5), ladite transmission (7), ledit deuxième onduleur (53) et ledit troisième onduleur (55) ;
ledit second système (20^{III}) comprenant ledit premier onduleur (52), ledit générateur (8) et ledit chargeur embarqué (57) ;
ledit second ensemble de refroidissement (200^{III}) comprenant une première vanne à trois voies (205^{III}), qui peut être réglée sur :
- une première configuration, dans laquelle elle est adaptée pour permettre, lors de l'utilisation, le passage dudit second fluide depuis ladite seconde pompe (202^{III}) vers ledit générateur (8) et ledit onduleur (52) et pour empêcher le passage dudit second fluide vers ledit chargeur embarqué (57) ; ou
- une seconde configuration, dans laquelle elle est adaptée pour empêcher, lors de l'utilisation, le passage dudit second fluide de ladite seconde pompe (202^{III}) vers ledit générateur (8) et ledit onduleur (52) et pour permettre le passage dudit second fluide vers ledit chargeur embarqué (57).

8. Véhicule de travail selon l'une quelconque revendication précédente, dans lequel ledit premier système (10^{IV}) comprend ledit moteur de pompe hydraulique (54), ledit moteur électrique (5), ladite transmission (7), ledit deuxième onduleur (53), ledit troisième onduleur (55) et ledit convertisseur CC/CC (56) ;
ledit second système (20^{IV}) comprenant ledit premier onduleur (52), ledit générateur (8) et ledit chargeur embarqué (57) ;
ledit second ensemble de refroidissement (200^{IV}) comprenant une première vanne à trois voies (205^{IV}), qui peut être réglée sur :
- une première configuration, dans laquelle elle est adaptée pour permettre, lors de l'utilisation, le passage dudit second fluide depuis ladite seconde pompe (202^{IV}) vers ledit générateur (8) et ledit onduleur (52) et pour empêcher le passage dudit second fluide vers ledit chargeur embarqué (57) ; ou
- une seconde configuration, dans laquelle elle est adaptée pour empêcher, lors de l'utilisation, le passage dudit second fluide de ladite seconde pompe (202^{IV}) vers ledit générateur (8) et ledit onduleur (52) et pour permettre le passage dudit second fluide vers ledit chargeur embarqué (57).

9. Véhicule de travail selon l'une quelconque revendication précédente, dans lequel ledit premier circuit (101 ; 10^{II} ; 101^{II} ; 101^{III} ; 101^{IV}) comprend :
- une première branche (101a ; 101a^{I} ; 101a^{II} ; 101a^{III} ; 101a^{IV}) s'étendant de ladite première pompe (102 ; 102^{I} ; 102^{II} ; 102^{III} ; 102^{IV}) à travers ou à proximité dudit moteur de pompe hydraulique (54), dudit moteur électrique (5) et de ladite transmission (7) ;
- une seconde branche (101b ; 101b^{I} ; 101b^{II} ; 101b^{III} ; 101b^{IV}), qui relie fluidiquement ladite première branche (101a ; 101a^{I} ; 101a^{II} ; 101a^{III} ; 101a^{IV}) audit premier échangeur de chaleur (103 ; 103^{I} ; 103^{II} ; 103^{III} ; 103^{IV}) ;
- une troisième branche (101c ; 101c^{I} ; 101c^{II} ; 101c^{III} ; 101c^{IV}) s'étendant entre ladite première branche (101a ; 101a^{I} ; 101a^{II} ; 101a^{III} ; 101a^{IV}) et ladite seconde branche (101b ; 101b^{I} ; 101b^{II} ; 101b^{III} ; 101b^{IV}) ; et
- une soupape de dérivation (105 ; 105^{I} ; 105^{II} ; 105^{III} ; 105^{IV}), qui est reliée fluidiquement à ladite première branche (101a ; 101a^{I} ; 101a^{II} ; 101a^{III} : 101a^{IV}) et à ladite troisième branche (101c ; 101c^{I} ; 101c^{II} ; 101c^{III} ; 101c^{IV}) ;
dans lequel ladite soupape de dérivation (105 ; 105^{I} ; 105^{II} ; 105^{III} ; 105^{IV}) peut être réglée sur :
- une première configuration, dans laquelle elle permet le passage dudit premier fluide depuis ladite première pompe (102 ; 102^{I} ; 102^{II} ; 102^{III} ; 102^{IV}) vers ladite transmission (7) le long de ladite première branche (101a ; 101a^{I} ; 101a^{II} ; 101a^{III} ; 101a^{IV}) et empêche le passage dudit premier fluide le long de ladite troisième branche (101c ; 101c^{I} ; 101c^{II} ; 101c^{III} ; 101c^{IV}) ; ou
- une seconde configuration, dans laquelle elle empêche le passage dudit premier fluide provenant de ladite première pompe (102 ; 102¹ ; 102^{II} ; 102^{III} ; 102^{IV}) vers ladite transmission (7) le long de ladite première branche (101a ; 101a^{I} ; 101a^{II} ; 101a^{III} ; 101a^{IV}) et permet le passage dudit premier fluide le long de ladite troisième branche (101c ; 101c^{I} ; 101c^{II} ; 101c^{III} ; 101c^{IV}).

10. Véhicule de travail selon l'une quelconque des revendications 2, 3 et 11, dans lequel ladite unité de commande (500 ; 500^{I}) est configurée pour activer ladite seconde pompe (202 ; 202^{I}) et/ou ledit second ventilateur (204 ; 204^{I}) lorsque ledit véhicule de travail (1 ; 1^{I}) est réglé, lors de l'utilisation, sur ledit mode hybride et pour désactiver ladite seconde pompe (202 ; 202^{I}) et/ou ledit second ventilateur (204 ; 204^{I}) lorsque ledit véhicule de travail (1 ; 1^{I}) est réglé, lors de l'utilisation, sur ledit mode de charge branché ou sur ledit mode électrique.

11. Véhicule de travail selon l'une quelconque revendication précédente, comprenant en outre :
- un troisième système (30) et un quatrième système (40) à refroidir ;
- un troisième ensemble de refroidissement (300) et un quatrième ensemble de refroidissement (400), qui sont respectivement conçus pour refroidir ledit troisième système (30) et ledit quatrième système (40) ;
ledit troisième ensemble de refroidissement (300) comprenant :
- un troisième circuit (301), qui est adapté pour être traversé par un troisième fluide ;
- au moins une troisième pompe (302) conçue pour faire circuler ledit troisième fluide à l'intérieur dudit troisième circuit (301) ; et
- au moins un troisième échangeur de chaleur (303) ;
ledit quatrième ensemble de refroidissement (400) comprenant :
- un quatrième circuit (401), qui est adapté pour être traversé par un quatrième fluide ;
- au moins une quatrième pompe (402) conçue pour faire circuler ledit quatrième fluide à l'intérieur dudit quatrième circuit (401) ; et
- au moins un quatrième échangeur de chaleur (403) ;
ladite unité de commande (500) étant configurée pour commander ladite troisième pompe (302) et ladite quatrième pompe (402) indépendamment l'une de l'autre et indépendamment desdites première et deuxième pompes (102, 202) ;
ledit troisième système (30) comprenant ledit convertisseur CC/CC (56) et ledit chargeur embarqué (57) ;
ledit quatrième système (40) comprenant ledit moyen de stockage d'énergie électrique (6).

12. Véhicule de travail selon l'une quelconque revendication précédente, comprenant en outre un troisième système (30^{I}) à refroidir et un troisième ensemble de refroidissement (300^{I}) configuré pour refroidir ledit troisième système (30^{I}) ;
ledit troisième ensemble de refroidissement (300^{I}) comprenant :
- un troisième circuit (301^{I}), qui est adapté pour être traversé par un troisième fluide ;
- au moins une troisième pompe (302^{I}) conçue pour faire circuler ledit troisième fluide à l'intérieur dudit troisième circuit (301^{I}) ; et
- au moins un troisième échangeur de chaleur (303^{I}) ;
ladite unité de commande (500) étant configurée pour commander ladite troisième pompe (302^{I}) indépendamment desdites première et deuxième pompes (102^{I}, 202^{I}) ;
ledit troisième système (30^{I}) comprenant ledit convertisseur CC/CC (56), ledit chargeur embarqué (57) et ledit moyen de stockage d'énergie électrique (6).

13. Véhicule de travail selon les revendications 2, 3 et 11, dans lequel ledit troisième ensemble de refroidissement (300) comprend un troisième ventilateur (304), qui est adapté pour augmenter l'énergie cinétique de l'air frappant, lors de l'utilisation, ledit troisième échangeur de chaleur (303) ;
dans lequel ladite unité de commande (500) est configurée pour activer ladite troisième pompe (302) et/ou ledit troisième ventilateur (304) et pour désactiver lesdites première et seconde pompes (102, 202) et/ou lesdits premier et second ventilateurs (104, 204) lorsque ledit véhicule de travail (1) est réglé, lors de l'utilisation, sur ledit mode de charge branché.

14. Véhicule de travail selon les revendications 2, 3 et 12, dans lequel ledit troisième ensemble de refroidissement (300^{I}) comprend :
- un troisième ventilateur (304^{I}), qui est adapté pour augmenter l'énergie cinétique de l'air frappant, lors de l'utilisation, ledit troisième échangeur de chaleur (303^{I}) ;
- un refroidisseur (4030), qui est adapté pour refroidir, lors de l'utilisation, ledit troisième fluide ;
ledit troisième ensemble de refroidissement (300^{I}) comprenant en outre une seconde vanne à trois voies (305^{I}), qui peut être réglée sur :
- une première configuration, dans laquelle elle est adaptée pour permettre le passage dudit troisième fluide de ladite troisième pompe (302^{I}) audit troisième échangeur de chaleur (303^{I}) ; ou
- une seconde configuration, dans laquelle elle est adaptée pour empêcher le passage dudit troisième fluide de ladite troisième pompe (302^{I}) audit troisième échangeur de chaleur (303^{I}) et pour permettre le passage dudit troisième fluide de ladite troisième pompe (302^{I}) vers ledit refroidisseur (4030).
dans lequel lorsqu'une température ambiante est inférieure à un seuil de température, ladite unité de commande (500^{I}) est configurée pour activer, lors de l'utilisation, ledit troisième ventilateur (304^{I}), pour désactiver ledit refroidisseur (4030) et pour régler ladite deuxième vanne à trois voies (305^{I}) à ladite première configuration ; lorsque ladite température ambiante est supérieure audit seuil de température, ladite unité de commande (500^{I}) est configurée pour désactiver, lors de l'utilisation, ledit troisième ventilateur (304^{I}), pour activer ledit refroidisseur (4030) et pour régler ladite deuxième vanne à trois voies (305^{I}) dans ladite seconde configuration.

15. Véhicule de travail selon la revendication 7 ou la revendication 9 lorsqu'elle dépend de la revendication 7, comprenant en outre un troisième système (30^{III}) à refroidir et un troisième ensemble de refroidissement (300^{III}) conçu pour refroidir ledit troisième système (30^{III}) ;
ledit troisième ensemble de refroidissement (300^{III}) comprenant :
- un troisième circuit (301^{III}), qui est adapté pour être traversé par un troisième fluide ;
- au moins une troisième pompe (302^{III}) conçue pour faire circuler ledit troisième fluide à l'intérieur dudit troisième circuit (301^{III}) ; et
- au moins un troisième échangeur de chaleur (303^{III}) ;
ladite unité de commande (500^{III}) étant configurée pour commander ladite troisième pompe (302^{III}) indépendamment desdites première et seconde pompes (102^{III} ; 202^{III}) ; ledit troisième système (30^{III}) comprenant ledit convertisseur CC/CC (56).

16. Procédé de commande d'un véhicule de travail (1 ; 1^{I} ; 1^{II} ; 1^{III} ; 1^{IV}) selon l'une quelconque des revendications précédentes ; ledit procédé comprenant l'étape i) consistant à commander ladite première pompe (102 ; 102^{I} ; 102^{II} ; 102^{III} ; 102^{IV}) et ladite seconde pompe (202 ; 202^{I} ; 202^{II} ; 202^{III} ; 202^{IV}) indépendamment l'une de l'autre.
